(19)

Europäisches Patentamt
European Patent Office
Office européen des brevets

(11) **EP 4 786 095 A1**

(12) **EUROPEAN PATENT APPLICATION**
published in accordance with Art. 153(4) EPC

(43) Date of publication:
**05.08.2026  Bulletin 2026/32**

(21) Application number: **24872080.7**

(22) Date of filing: **20.09.2024**

(51) International Patent Classification (IPC):
**B24B 17/22** (2006.01)    **B24B 49/10** (2006.01)
**G05B 19/404** (2006.01)    **G05B 19/416** (2006.01)

(52) Cooperative Patent Classification (CPC):
**B23Q 17/22; B24B 49/10; G05B 19/404;
G05B 19/416**

(86) International application number:
**PCT/JP2024/033637**

(87) International publication number:
**WO 2025/070289 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.09.2023  JP 2023169204**

(71) Applicant: **Shibaura Machine Co., Ltd.
Tokyo 100-0011 (JP)**

(72) Inventors:
• **SUZUKI, Toru
  Numazu-shi, Shizuoka 410-8510 (JP)**
• **AKIYAMA, Takanobu
  Numazu-shi, Shizuoka 410-8510 (JP)**
• **FUKUTA, Masahiko
  Gotemba-shi, Shizuoka 412-0038 (JP)**

(74) Representative: **2K Patent Partnerschaft mbB
Hamburger Allee 26-28
60486 Frankfurt am Main (DE)**

(54) **PROCESSING MACHINE, PROCESSING SYSTEM, AND METHOD FOR MANUFACTURING PROCESSED OBJECT**

(57)    In a processing machine 1, a Z-axis table 9Z supports a workpiece 103. A Z-axis sensor 25Z outputs a signal corresponding to a first displacement of the Z-axis table 9Z in a Z-direction and to a first error which is a displacement of the Z-axis table 9Z in an X-direction. A workpiece spindle 15W has a constant positional relationship with a Z-axis guide 17Z in a Y-direction. Further, the workpiece spindle 15W makes the workpiece 103 rotate about a workpiece rotation axis AW which is parallel to the Z-direction or X-direction. When assuming a virtual plane VP which includes the workpiece rotation axis AW and is parallel to the X-direction and Z-direction, a distance from the virtual plane VP to the Z-axis sensor 25Z is less than 1/3 of a distance hr from the virtual plane VP to the Z-axis guide 17Z.

FIG.1

## Description

### Technical Field

The present disclosure relates to a processing machine, processing system, and method for manufacturing a processed object.

### Background Art

Known in the art is a processing machine for processing a workpiece by a tool (for example the following PTL 1). Such a processing machine, for example, guides a movable portion which supports the tool or workpiece by a linear guide so as to realize relative movements of the tool and the workpiece. The movable portion ideally moves on a straight line along the linear guide. However, in actuality, it has waviness while moving due to various factors. That is, the straightness or squareness does not become 0. This waviness lowers the processing accuracy.

The following PTL 1 proposes a processing machine which detects displacement of the movable portion by using a two-dimensional scale (sometimes also referred to as a two-dimensional linear encoder or the like) so as to improve the straightness. Specifically, the processing machine in PTL 1 has as the movable portion supporting the tool or workpiece a first movable portion which is guided in a first direction by a first linear guide and a second movable portion which is guided in a second direction perpendicular to the first direction by a second linear guide. The two-dimensional scale detects the displacement in the first direction of the first movable portion and the displacement in the second direction (error) of the first movable portion. Further, when an error in the second direction is detected by the two-dimensional scale, the processing machine controls the position in the second direction of the second movable portion so as to compensate for (in other words, cancel out) an influence of the error exerted upon the relative positions of the tool and the workpiece.

The following PTL 2 discloses a technique which relating to not a processing machine for processing a workpiece by a tool, but a stage device used for manufacture of semiconductors and the like, but utilizes a two-dimensional scale.

### Citation List

### Patent Literature

    PTL 1: Japanese Patent Publication No. 2022-24542
    PTL 2: Japanese Patent Publication No. 2015-109079

### Summary of Invention

### Technical Problem

A processing machine, processing system, and method for manufacture of the processed object which are able to improve the precision of detection by a two-dimensional scale have been awaited.

### Solution to Problem

A processing machine according to one aspect of the present disclosure includes a first movable portion, linear guide, two-dimensional scale, and spindle. The first movable portion supports a workpiece or tool. The linear guide guides the first movable portion in a first direction. The two-dimensional scale outputs a signal corresponding to a first displacement of the first movable portion in the first direction and to a first error comprised of displacement of the first movable portion in a second direction perpendicular to the first direction. The spindle has a constant positional relationship with the linear guide in a third direction which is perpendicular to the first direction and the second direction and makes the workpiece or the tool rotate about a first rotation axis which is parallel to the first direction or the second direction. When assuming a virtual plane which includes the first rotation axis and is parallel to the first direction and the second direction, the distance from the virtual plane to the two-dimensional scale is less than 1/3 of the distance from the virtual plane to the linear guide.

A processing machine according to one aspect of the present disclosure includes a support portion, fixed portion, first movable portion, scale placement portion, and two-dimensional scale. The support portion includes a first surface which faces a third direction which is perpendicular to a first direction and a second direction. The fixed portion is supported upon the first surface. The first movable portion supports a workpiece or tool. Further, the first movable portion is supported upon the fixed portion through a linear guide and is guided by the linear guide in the first direction relative to the fixed portion. The scale placement portion is supported upon the first surface and is spaced apart from the fixed portion. The two-dimensional scale outputs a signal corresponding to a first displacement of the first movable portion in the first direction and to a first error comprised of the displacement of the first movable portion in the second direction. Further, the two-dimensional scale includes a scale portion and detection portion. The scale portion is fixed to the scale placement portion. The detection portion is fixed to the first movable portion and outputs a signal in accordance with a relative movement with the scale portion. The scale placement portion has a height over the position of the linear guide to the side which the first surface faces. The scale portion is positioned closer to the side which the first surface faces than the linear guide.

A processing system according to one aspect of the present disclosure includes the processing machine and a diagnostic device which acquires information of the detected value of the first error from the processing machine and displays an image corresponding to the acquired information.

A method for manufacturing a processed object according to one aspect of the present disclosure includes a step of using the processing machine to make the workpiece and the tool contact and process the workpiece to the processed object.

**Effect of Invention**

According to the above configuration or procedure, an accuracy of detection by the two-dimensional scale can be improved.

**Brief Description of Drawings**

FIG. 1 is a schematic perspective view showing the configuration of a processing machine according to a first embodiment.
FIG. 2 is a schematic perspective view showing the processing machine in FIG. 1 in a state where the configuration relating to a two-dimensional scale is detached.
FIG. 3A and FIG. 3B are views for explaining the configuration and operation of the two-dimensional scale.
FIG. 4 is a block diagram showing the configuration of a control system in the processing machine in FIG. 1.
FIG. 5 is a view showing details of part of the block diagram in FIG. 4.
FIG. 6 is a view of explaining a method of calculation of error due to roll.
FIG. 7 is a view of explaining a method of calculation of error due to yaw.
FIG. 8 is a block diagram showing the configuration of a control system in a processing machine according to a second embodiment.
FIG. 9 is a view of explaining the configuration of a three-dimensional scale in FIG. 8.

**Description of Embodiments**

(Outline of Embodiments)

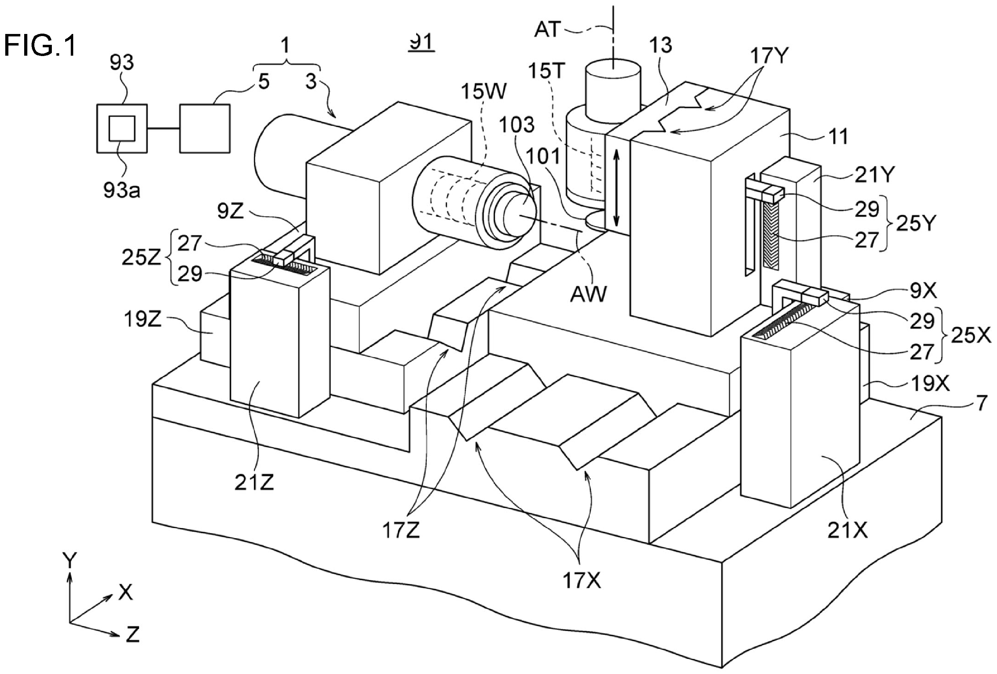

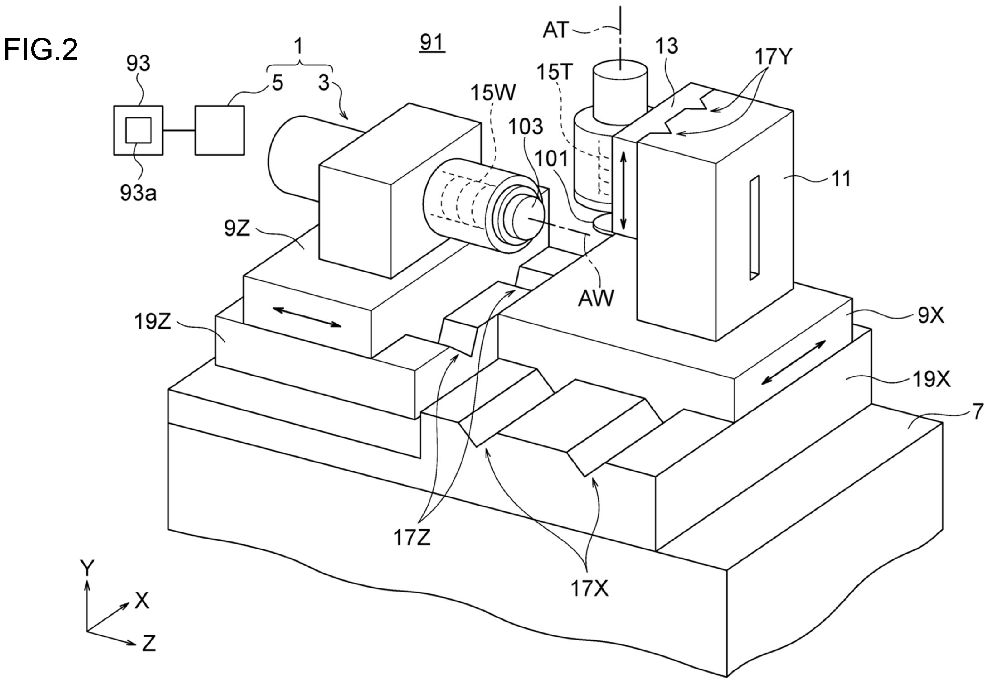

FIG. 1 is a schematic perspective view showing the configuration of a processing machine 1 according to an embodiment. FIG. 2 is a view excluding the configuration relating to a two-dimensional scale in FIG. 1. In these views, for convenience, an orthogonal coordinate system XYZ is attached. The +Y-direction is for example vertically upward.

The art according to the present disclosure is able to be applied to various processing machines. The processing machine 1 shown is just one example of them. However, in the following explanation, for convenience, sometimes the explanation will be predicated on the configuration of the processing machine 1.

The processing machine 1 for example performs processing (for example grinding and/or polishing) of a workpiece 103 by a tool 101. In more detail, in the example shown, the workpiece 103 is rotated about a workpiece rotation axis AW parallel to a Z-axis. Further, the tool 101 is configured by a grinding stone and is rotated about a tool rotation axis AT parallel to a Y-axis. Further, the tool 101 is made to abut against the workpiece 103 to thereby, grind and/or polish the workpiece 103. Such a processing machine 1 is for example able to be utilized as an aspheric surface processing machine for preparing aspherical lenses and the like.

Each of a plurality of movable portions (X-axis table 9X, saddle 13, and Z-axis table 9Z) which support the tool 101 or workpiece 103 moves parallel along the X-axis, Y-axis, or Z-axis. Due to this, the tool 101 and the workpiece 103 relatively move in any directions. This parallel movement is realized by each movable portion being guided by a linear guide (X-axis guide 17X, Y-axis guide 17Y, or Z-axis guide 17Z). Further, the displacement of parallel movement of each movable portion, as shown in FIG. 1, is detected by the two-dimensional scale (X-axis sensor 25X, Y-axis sensor 25Y, or Z-axis sensor 25Z). The detected displacement is for example utilized for feedback control of parallel movement.

The two-dimensional scale becomes able to not only detect displacement in the direction (first direction) in which each movable portion should move in parallel but also displacement (error) in a direction (second direction) perpendicular to the first direction. For example, the X-axis sensor 25X detects not only displacement of the X-axis table 9X in the X-direction (first direction) but also displacement (error) of the X-axis table 9X in the Z-direction (second direction). The Y-axis sensor 25Y detects not only the displacement of the saddle 13 in the Y-direction (first direction) but also displacement (error) of the saddle 13 in the Z-direction (second direction). The Z-axis sensor 25Z detects not only the displacement of the Z-axis table 9Z in the Z-direction (first direction) but also displacement (error) of the Z-axis table 9Z in the X-direction (second direction).

By the two-dimensional scale detecting an error as explained above, for example, the processing machine 1 can be controlled so as to compensate for an error of relative positions of the tool 101 and the workpiece 103 due to that error. For example, due to the X-axis sensor 25X, when an error of the X-axis table 9X in the Z-direction, the Z-axis table 9Z can be made to move in the same direction and same amount as that error so as to reduce the relative positional error of the tool 101 and the workpiece 103. In addition, or alternatively, the error detected by the two-dimensional scale may be utilized for quality control as well.

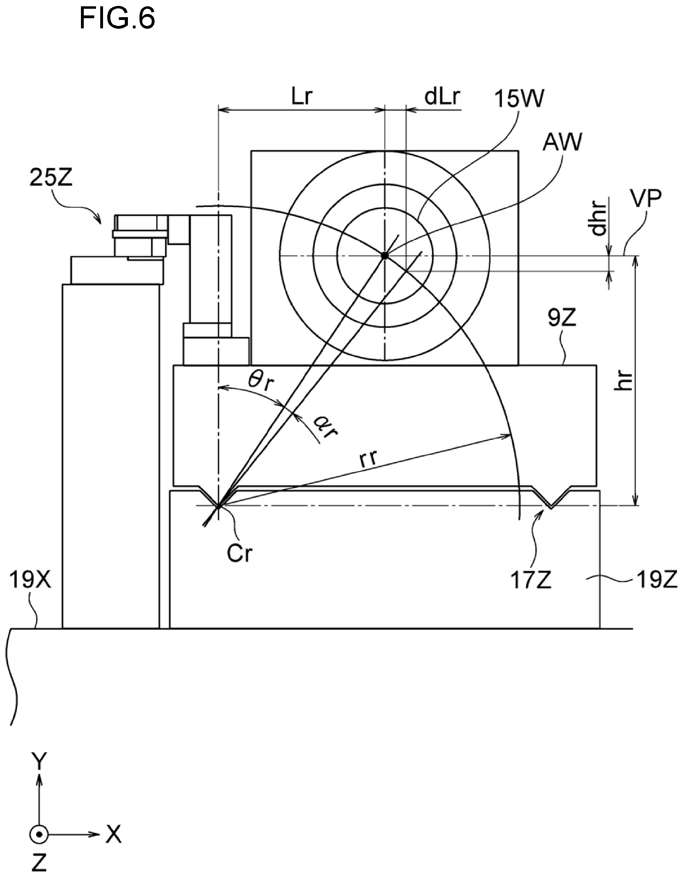

Here, assume a virtual plane VP which is parallel to two directions in which the two-dimensional scale detects displacement and includes a processing point at which the tool 101 contacts the workpiece 103 (not shown in FIG. 1 and FIG. 2, a virtual plane VP relating to the Z-axis sensor 25Z shown in FIG. 6). Assume a virtual plane VP which includes the rotation axis (AW or AT) in place of the processing point as well. At this time, the two-dimensional scale is positioned in the virtual plane VP.

For example, the X-axis sensor 25X is positioned in a virtual plane VP (FIG. 6) which is parallel to the X-direction and to the Z-direction and includes the workpiece rotation axis AW. The Y-axis sensor 25Y is positioned in a virtual plane VP (not shown) which is parallel to the Y-direction and to the Z-direction and includes the tool rotation axis AT. The Z-axis sensor 25Z is positioned in a virtual plane VP (FIG. 6) which is parallel to the Z-direction and to the X-direction and includes the workpiece rotation axis AW.

By doing this, as will be explained in detail later, the accuracy of the error detected by the two-dimensional scale is improved. From the viewpoint of obtaining this effect, the two-dimensional scale does not always have to be positioned in the virtual plane VP. It may also be arranged at a position close to the virtual plane VP. For example, the distance from the virtual plane VP to the two-dimensional scale may be made less than 1/2, less than 1/3, less than 1/5, or less than 1/10 of the distance from the virtual plane VP to the linear guide.

From another viewpoint, the processing machine 1 is configured to make the two-dimensional scale approach the virtual plane VP. Specifically, provision is made of scale placement portions (X-axis scale placement portion 21X, Y-axis scale placement portion 21Y, and Z-axis scale placement portion 21Z) in which portions of the two-dimensional scales (scale portions which will be explained later) are provided.

When taking as an example the X-axis among the three axes, the X-axis scale placement portion 21X has a height by which its upper surface is positioned above the X-axis guide 17X. A portion (scale portion) of the X-axis sensor 25X is provided at the upper surface of the X-axis scale placement portion 21X. Due to this, the X-axis sensor 25X is positioned closer to the virtual plane VP than the X-axis guide 17X.

Note that, the configuration for making the two-dimensional scale approach the virtual plane VP need not be by the scale placement portion. Further, the scale placement portion need not contribute to approach of the two-dimensional scale to the virtual plane VP. The scale placement portion may exert an effect (explained later) other than making the two-dimensional scale approach the virtual plane VP.

The above is an outline of the processing machine 1 according to an embodiment. Below, an explanation will be given in the following order.

Section A. First Embodiment

1. Overall Configuration of Processing Machine (FIG. 1 and FIG. 2)
2. Configuration Relating to Scale

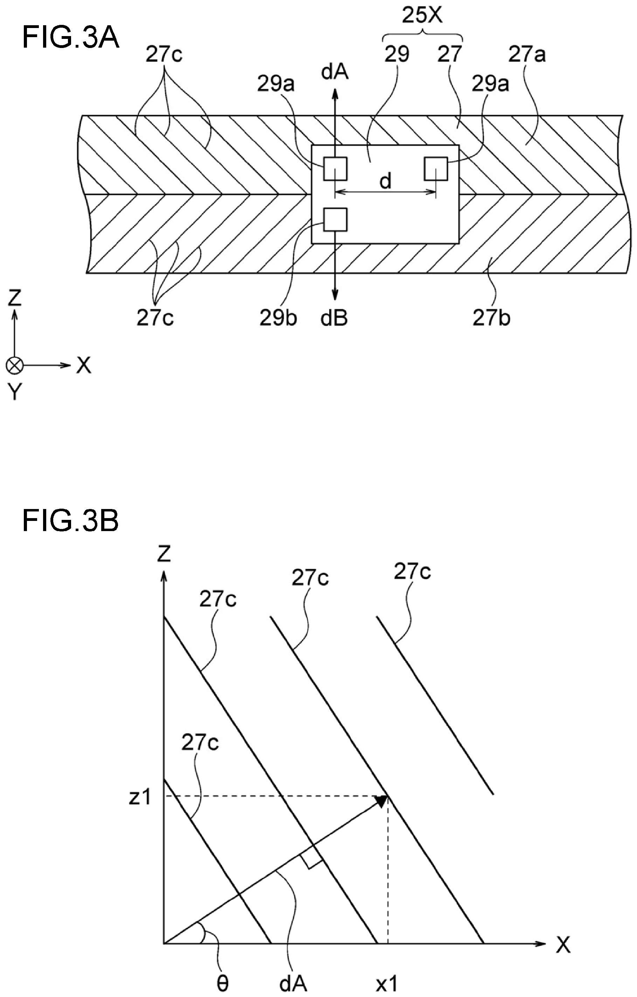

2.1. Scale (FIG. 3A and FIG. 3B)

2.1.1. Scale in General
2.1.2. Specific Example of Configuration of Scale
2.1.3. Configuration Relating to Detection of Rotation Error

2.2. Mode of Placement of Scale in Each Axis
2.3. Scale Placement Portion

3. Control System

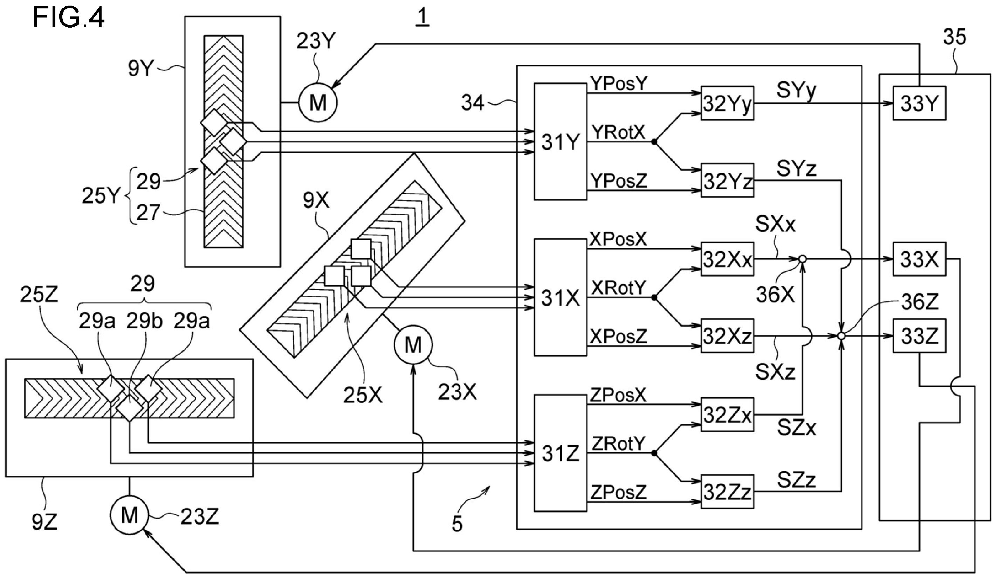

3.1. Control System of Plurality of Axes (FIG. 4)

3.1.1. Outline of Control
3.1.2. Signal Processing
3.1.3. Feedback Control
3.1.4. Compensation for Error

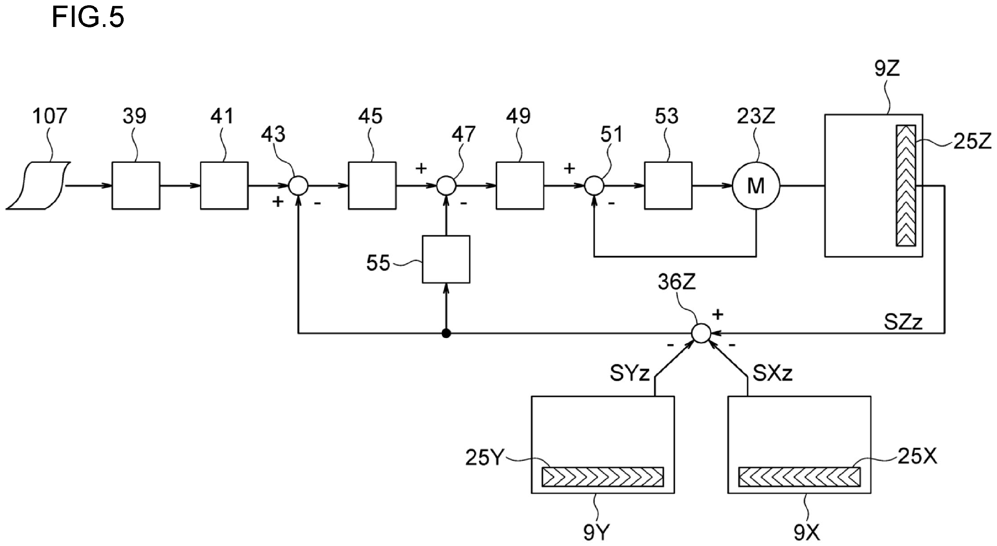

3.2. Control System in Each Axis (FIG. 5)

3.2.1. Control of Z-Axis Based on Z-Axis Sensor

3.2.2. Control of Z-Axis Based on Sensors of Other Axes

3.2.3. Addendum

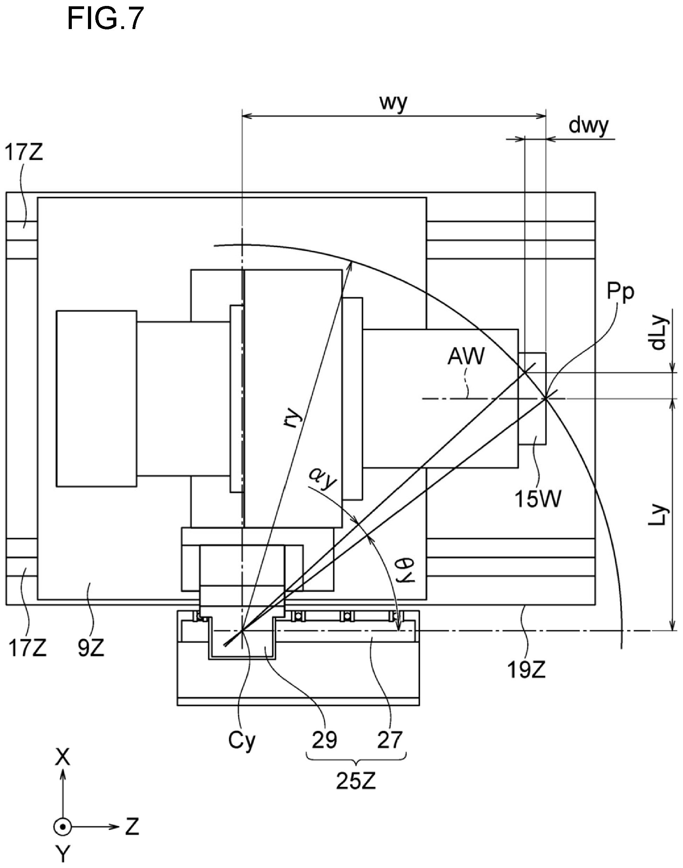

4. Method of Calculation of Influence of Rotation Error (FIG. 6 and FIG. 7)

4.1. Influence of Roll
4.2. Influence of Yaw
4.3. Influence of Pitch

5. Processing System (FIG. 1)
6. Summary of First Embodiment

Section B. Second Embodiment

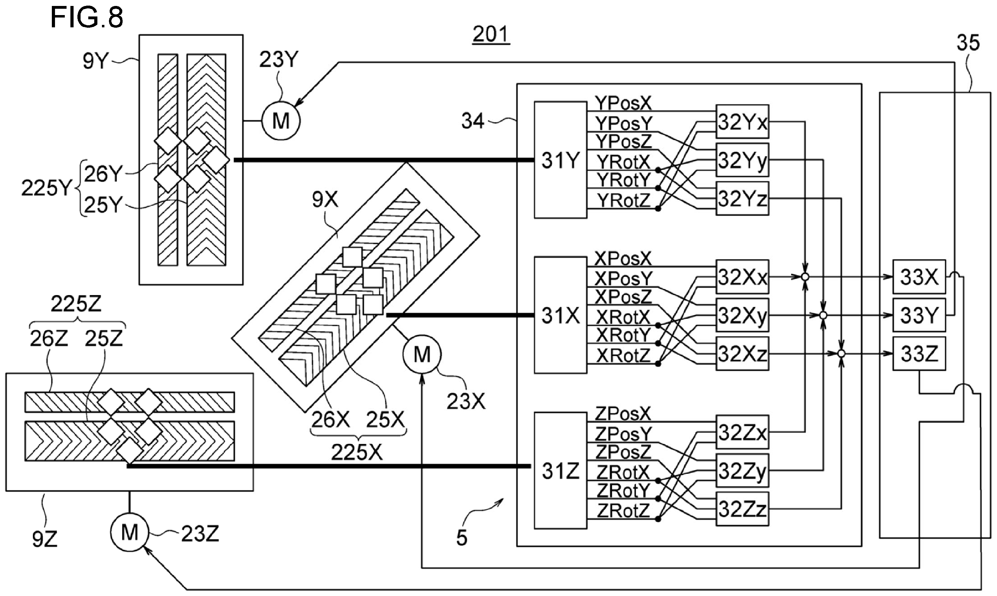

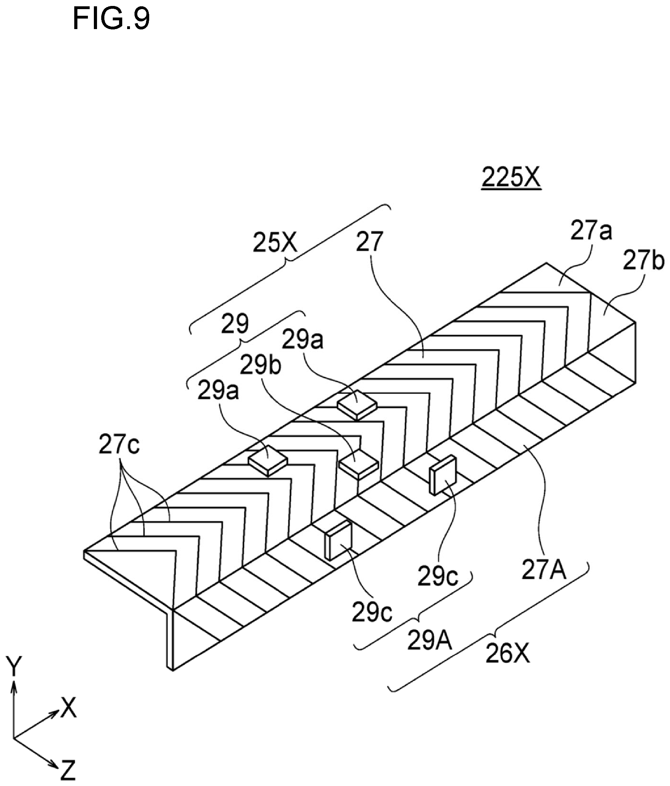

7. Overall Configuration of Second Embodiment (FIG. 8)
8. Scale (FIG. 9)
9. Summary of Second Embodiment

<Section A. First Embodiment>

(1. Overall Configuration of Processing Machine)

The processing machine 1 for example has a machine body 3 holding the tool 101 and workpiece 103 and a controller 5 which controls the machine body 3.

The machine body 3, as already explained, makes the workpiece 103 and the tool 101 respectively rotate and makes the tool 101 and the workpiece 103 relatively move to process the workpiece 103. In more detail, for example, before processing (from another viewpoint, before contact of the tool 101 and the workpiece 103), the tool 101 is moved in the Y-direction to be positioned. After that, in a state where the tool 101 and the workpiece 103 are respectively rotating, processing is carried out by the movement of the tool 101 in the X-direction and/or movement of the workpiece 103 in the Z-direction. In order to realize the operation explained above, for example, the machine body 3 is configured as follows.

The machine body 3 has a base 7, the already explained X-axis table 9X supported upon the base 7, a column 11 fixed to the X-axis table 9X, the already explained saddle 13 supported by the column 11, and a tool spindle 15T supported by the saddle 13. The tool spindle 15T holds the tool 101 and is able to rotate about the already explained tool rotation axis AT. The X-axis table 9X is able to linearly move on the base 7 in the X-direction. The saddle 13 is able to linearly move in the Y-direction with respect to the column 11.

Further, the machine body 3 has a Z-axis table 9Z supported upon the base 7 and a workpiece spindle 15W supported by the Z-axis table 9Z. The workpiece spindle 15W holds the workpiece 103 and is able to rotate about the already explained workpiece rotation axis AW. The Z-axis table 9Z is able to linearly move on the base 7 in the Z-direction.

The mechanisms (drive source and guide etc.) for realizing parallel movements of the movable portions (9X, 13, and 9Z) and rotations of the spindles (15W and 15T) may be configured in various ways. For example, they may be known configurations or ones applying known configurations. For example, the drive source may be made an electric motor, hydraulic apparatus, or pneumatic apparatus. When taking as an example the case of an electric motor, for example, the spindle may be driven by a rotary spindle motor (electric motor). The parallel movement of the movable portion may be realized by a linear motor or may be realized by conversion of rotation of a rotary motor to linear motion by a suitable mechanism (for example ball-screw mechanism).

Further, for example, the linear guide (25X, 25Y, or 25Z) for guiding (from another viewpoint, restricting movement in a direction other than the drive direction) of the movable portions (9X, 13, and 9Z) may be a sliding guide by which the movable portion and the fixed portion slide, may be a rolling guide by which rolling elements between the movable portion and the fixed portion roll, may be a static pressure guide by which air or oil is interposed between the movable portion and the fixed portion, or may be a combination of two or more of them. In the same way, a bearing of the spindle (15W and 15T) may be a sliding bearing, rolling bearing, static pressure bearing, or a combination of two or more of them.

In the example shown, each movable portion (9X, 13, or 9Z) is provided with two guides (17X and 17X, 17Y and 17Y, or 17Z and 17Z) which extend in the movable direction alongside each other. Note that, the entire configuration including two guides may be grasped as one guide as well. Further, each movable portion may be provided with a guide configured where two guides cannot be grasped as being provided (that is, it can only be grasped that one guide is provided). The two guides relating to each of the respective X-axis and Z-axis support the movable portion (9X or 9Z). The two Y-axis guides 17Y relating to the Y-axis do not always support the entire load of the saddle 13. However, the column 11 can be expressed as supporting the saddle 13 through the Y-axis guide 17Y.

In the example shown, the two guides of each movable portion (9X, 13, or 9Z) are configured by a V-V rolling guide. In more detail, for example, the X-axis guide 17X has grooves having V-shaped cross-sections formed in the upper surface of the X-axis bed 19X supporting the X-axis table 9X, ridges having triangle-shaped cross-sections formed on a lower surface of the X-axis table 9X, and a plurality of rollers (not shown) interposed between the grooves and the ridges. The Y-axis guide 17Y has grooves having V-shaped cross-sections formed in the side surface of the column 11, ridges having triangle-shaped cross-sections formed on the side surface of the saddle 13, and a plurality of rollers (not shown) interposed between the grooves and the ridges. The Z-axis guide 17Z has grooves having V-shaped cross-sections formed in the upper surface of the Z-axis bed 19Z which is supported by a portion of the X-axis bed 19X extended to the -Z side, ridges having triangle-shaped cross-sections formed in the lower surface of the Z-axis table 9Z, and a plurality of rollers (not shown) interposed between the grooves and the ridge.

The controller 5, for example, although not particularly shown, is configured including an NC device and driver (for example servo driver). The NC device, for example, although not particularly shown, is configured including a CPU (central processing unit), ROM (read only memory), RAM (random access memory), and external storage device (for example HDD (hard disk drive) or SSD (solid state drive)). In other words, the NC device is configured including a computer. By the CPU running a program stored in the ROM and/or external storage device, various types of function parts performing control and the like are constructed. Further, the controller 5 may include a logical circuit which performs only a certain operation as well.

The controller 5, for example, controls the rotational speeds of the spindles (15W and 15T) and the speeds and positions of the movable portions (9X, 13, and 9Z). The position control and speed control may be, for example, so-called full closed loop controls. That is, the detected values of the position and speed of the movable portion may be fed back. Of course, the position control and/or speed control may also be made open loop control in which feedback control is not carried out or may be made semi-closed loop control in which the detected value of the rotational speed of the electric motor is fed back.

The processing precision of the processing machine 1 may be suitably set. For example, the processing machine 1 may be one able to realize processing with a precision of a submicrometer order (error less than 1 $\mu$m) or precision of a nanometer order (error less than 10 nm). Such a machining tool has been already put into a practical use by the assignee of the present application (for example UVM series, ULG series, and ULC series). In more detail, for example, the positioning precision at each axis may be made 1 $\mu$m or less, 0.1 $\mu$m or less, 10 nm or less, or 1 nm or less.

(2. Configuration Relating to Scale)

(2.1. Scale)

In the present section 2.1, basically, the two-dimensional scale itself will be explained. In other words, matters common to the X-axis sensor 25X, Y-axis sensor 25Y, and Z-axis sensor 25Z will be explained. The mode of arrangement etc. of the two-dimensional scale of each axis will be explained in the next section (section 2.2).

However, for convenience, in the explanation of the present section, basically the X-axis sensor 25X will be taken as an example. The following explanation may be utilized for the two-dimensional scales which detect the displacements in the other directions. At that time, the terms in the following explanation may be suitably replaced with other terms. For example, when it utilized for the Y-axis sensor 25Y, "X" and "Y" are replaced with each other, "x" and "y" are replaced with each other, and the "X-axis table 9X" is replaced with the "saddle 13". When it utilized for the Z-axis sensor 25Z, "X" and "Z" are replaced with each other, and "x" and "z" are replaced with each other.

(2.1.1. Scale in General)

As shown in FIG. 1, the X-axis sensor 25X for example has a scale portion 27 extending in the X-direction and a detection portion 29 facing the scale portion 27. In the scale portion 27, for example, a plurality of optically or magnetically formed patterns are arranged in the X-direction (depending on the configuration of the X-axis sensor 25X, Z-direction in addition to the X-direction) at a constant pitch (in terms of a generic concept, by a predetermined rule). The detection portion 29 generates a signal corresponding to the relative position for each pattern. Accordingly, the displacement (position) can be detected by counting the signal generated along with the relative movements of the scale portion 27 and the detection portion 29 (that is, counting of the patterns).

The X-axis sensor 25X may be an absolute type able to identify the position (absolute position) of the detection portion 29 relative to the scale portion 27 based on the patterns of the scale portion 27 or may be an incremental type unable to perform such identification. As known, even an incremental type scale can identify the absolute position by making the detection portion 29 move to a predetermined position (for example movement limit) relative to the scale portion 27 and performing calibration.

The error relating to the movement of the X-axis table 9X (displacement in the Z-direction) naturally is small compared with the movable length of the X-axis table 9X in the X-direction. Accordingly, in the X-axis sensor 25X, the length of the range where the detection of the position in the Z-direction is possible may be made shorter than the length of the range where the detection of the position in the X-direction is possible. In the X-axis sensor 25X, the detection precision of the position in the X-direction and the detection precision of the position in the Z-direction may be equal to each other or may be different from each other. In any case, in the X-axis sensor 25X, the detection precision of the position in the X-direction and the detection precision of the position in the Z-direction may respectively be made relatively high. For example, they may be made 1 μm or less, 0.1 μm or less, 10 nm or less, or 1 nm or less.

(2.1.2. Specific Example of Configuration of Scale)

The configuration of the two-dimensional scale may be made various configurations including known configurations. In the following explanation, one example of them will be shown. As will be explained later, it is also possible for the X-axis sensor 25X to detect not only the displacements in the X-direction and the Z-direction, but also a rotation error about the Y-axis. However, in the present section 2.1.2, only the configuration relating to detection of displacements in the X-direction and Z-direction will be explained. Detection of the rotation error will be explained in the next section (section 2.1.3). For convenience, the term "displacement" designates linear displacement and does not designate rotational displacement unless there is particular explanation otherwise or there is contradiction. Further, for convenience, when explaining the positions and shapes etc. of the parts in the X-axis sensor 25X, sometimes the terms "X-direction" and "Z-direction" will be referred to assuming that there is no rotation error.

FIG. 3A is an enlarged view of a portion of the X-axis sensor 25X. Note that, for convenience of the explanation, sometimes the orientations of the scale portion 27 and the detection portion 29 with respect to the orthogonal coordinate system XYZ will be different between FIG. 3A and the other views. However, this is not an essential difference. In the following explanation (equations), the notations "+" and "-" may be suitably switched in accordance with the actual orientations.

The scale portion 27, for example, has an A-phase scale portion 27a and B-phase scale portion 27b which extend in the X-direction parallel to each other. The A-phase scale portion 27a and B-phase scale portion 27b have pluralities of optically or magnetically formed patterns 27c. The pluralities of patterns 27c are straight shaped inclined relative to the X-direction. Between the A-phase scale portion 27a and the B-phase scale portion 27b, the degrees of the inclination angles of the pluralities of patterns 27c are equal to each other, while the inclination directions are reverse to each other. The detection portion 29, for example, has an A-phase detection portion 29a which detects the patterns 27c of the A-phase scale portion 27a and a B-phase detection portion 29b which detects the patterns 27c of the B-phase scale portion 27b. Note that, the pluralities of patterns 27c resemble the bones of a fish in the A-phase scale portion 27a and B-phase scale portion 27b as a whole. Accordingly, a two-dimensional scale having such patterns will be sometimes referred to as a "fish bone type two-dimensional scale".

FIG. 3B is a schematic view showing a portion of the A-phase scale portion 27a enlarged.

By counting the patterns 27c detected by the A-phase detection portion 29a, a displacement dA in the direction perpendicular to the patterns 27c of the A-phase scale portion 27a is detected. The inclination angle of the direction perpendicular to the patterns 27c relative to the X-axis is defined as "θ", an X-direction component of the displacement dA is defined as x1, and a Z-direction component of the displacement dA is defined as z1. At this time, the following equation stands.

$$dA = x1 \times \cos\theta + z1 \times \sin\theta \quad (1)$$

On the other hand, by counting the patterns 27c detected by the B-phase detection portion 29b, a displacement dB (FIG. 3A) of the direction perpendicular to the patterns 27c of the B-phase scale portion 27b is detected. At this time, between the A-phase scale portion 27a and the B-phase scale portion 27b, the inclination angles of the patterns 27c are the same. Therefore, in the B-phase scale portion 27b as well, the inclination angle (absolute value) of the direction perpendicular to the patterns 27c relative to the X-axis is "θ". Further, when assuming that the detection portion 29 does not rotate about the Y-axis, the X-direction component and Z-direction component of the displacement dB are the same as the X-direction component and Z-direction component (x1 and Z1) of the displacement dA. Accordingly, the following equation stands.

$$dB = x1 \times \cos\theta - z1 \times \sin\theta \quad (2)$$

From the above equation (1) and equation (2), the following equations are derived.

$$x1 = (dA + dB) / (2 \times \cos\theta) \quad (3)$$

$$z1 = (dA - dB) / (2 \times \sin\theta) \quad (4)$$

By such a principle, the two-dimensional scale in the example shown can detect displacements in two directions.

As two-dimensional scales other than the example shown, for example, there can be mentioned the ones shown in FIG. 8 in PTL 1 and FIG. 4 in PTL 2. In such two-dimensional scales, a plurality of first patterns which extend parallel to the Z-axis and are arranged in the X-direction and plurality of second patterns which extend parallel to the X-axis and are arranged along the Z-axis provided. Further, displacement in the X-direction is detected by counting the plurality of first patterns, while displacement in the Z-direction is detected by counting the plurality of second patterns. That is, this two-dimensional scale is configured by usual one-dimensional linear scales arranged perpendicular to each other.

(2.1.3. Configuration Relating to Detection of Rotation Error)

The two-dimensional scales (25X, 25Y, and 25Z) according to the embodiment are configured so as to be able to detect rotation error about the axis perpendicular to the two directions in which displacement is detected. The detected rotation error is for example utilized for feedback control for reducing the influence of rotation error exerted upon the relative positions of the tool 101 and the workpiece 103. The configuration for detecting the rotation error is for example as follows.

As shown in FIG. 3A, the X-axis sensor 25X has two A-phase detection portions 29a having positions in the X-direction which are different from each other. Accordingly, when the detection portion 29 rotates about the Y-axis with respect to the scale portion 27, the relative positions of the two in the Z-direction change by amounts of movement in accordance with the amounts of rotation. Accordingly, the rotation error can be identified based on the two errors (displacements in the Z-direction) detected by the two A-phase detection portions 29a. Note that, it is clear that rather than two A-phase detection portions 29a being provided, two B-phase detection portions 29b may be provided.

In more detail, for example, the displacements dA which are detected by the two A-phase detection portions 29a are designated as dA' and dA", and their Z-direction components are designated as z1' and z1". The rotation error is very small, therefore x1 can be regarded to be the same in dA' and dA". At this time, in the same way as equation (1), the following equations stand.

$$dA' = x1 \times \cos\theta + z1' \times \sin\theta \quad (1)'$$

$$dA'' = x1 \times \cos\theta + z1'' \times \sin\theta \quad (1)''$$

If subtracting equation (1)" from equation (1)' and cleaning up the result, the following equation stands:

$$z1' - z1'' = (dA' - dA'') / \sin\theta \quad (5)$$

Further, when defining the distance between the two A-phase detection portions 29a "d", the rotation error "α" can be found from the following equation:

$$\alpha = \arctan((z1' - z1'') / d) \quad (6)$$

For calculation of the rotation error "α", the two errors (z1) which are detected at the same time by the two A-phase detection portions 29a are used. The "same time" referred to here need not be exactly the same time also. For example, the time points of detection of the two errors may be mutually different time points in the same cycle in cycles of repeated detection (sampling cycles) or cycles of repeated control (control cycles which will be explained later). Further, each of the two errors may be a mean value of a plurality of sampling cycles as well.

In the example in FIG. 3A, when there is no rotation error, the positions in the X-direction of one A-phase detection portion 29a and the B-phase detection portion 29b are the same as each other. However, as illustrated in FIG. 4 which will be explained later, the two positions of the two A-phase detection portions 29a in the X-direction may be different from the position of the B-phase detection portion 29b in the X-direction as well. In the example in FIG. 4, the B-phase detection portion 29b is positioned right in the middle of the two A-phase detection portions 29a in the X-direction. Further, in the example in FIG. 3A, when there is no rotation error, the positions of the two A-phase detection portions 29a in the Z-direction are the same as each other. However, the two may be different as well.

The distance "d" may be suitably set. The longer the distance "d", the larger the absolute value of z1'-z1" with respect to the absolute value of "$\alpha$". Therefore, the detection precision of "$\alpha$" is improved. However, the detection portion 29 is large in size. The distance "d" for example may be made longer than the distance in the Z-direction between the A-phase detection portion 29a and the B-phase detection portion 29b when no rotation error arises.

When x1 or z1 is calculated according to equation (3) or equation (4), either of the two displacements dA (dA' and dA") may be used, or a mean value of the two displacements dA or the like may be used. For example, in the example in FIG. 3A, the displacement dA which is detected by the A-phase detection portion 29a closer to the B-phase detection portion 29b may be used. In the example in FIG. 4, a mean value of the two displacements dA may be used.

In the detection of the rotation error, the displacement (error) in the Z-direction may be detected at the two mutually different positions in the X-direction. Therefore, naturally, detection is possible also in another type of two-dimensional scale. For example, as already explained, in a two-dimensional scale comprised of usual one-dimensional linear scales made perpendicular to each other, two detection portions which detect displacements in the Z-direction may be provided at different positions in the X-direction. Further, z1' and z1" detected by the two detection portions may be entered into equation (6) (equation (5) is naturally unnecessary).

(2.2. Mode of Placement of Scale in Each Axis)

In each movable portion (9X, 13, or 9Z) shown in FIG. 1 and FIG. 2, as the direction perpendicular to the direction (X-direction, Y-direction, or Z-direction) in which parallel movement must be carried out, two directions perpendicular to each other can be considered. For example, concerning the X-axis table 9X, as the direction perpendicular to the X-direction, there are the two directions of the Z-direction and the Y-direction. Accordingly, there is significance in providing two two-dimensional scales with mutually different orientations for one movable portion (one axis). For example, for the X-axis table 9X, provision may be made of a two-dimensional scale which detects displacements in the X-direction and Z-direction and a two-dimensional scale which detects displacements in the X-direction and Y-direction.

However, in the first embodiment, only one two-dimensional scale is provided for each movable portion. Further, provision is made of the two-dimensional scale so as to detect an error when viewing the processing machine 1 in the Y-direction. In other words, detection of error in the Y-direction is made low in priority. Specifically, although already explained, the X-axis sensor 25X is provided having an orientation for detecting displacements in the X-direction and Z-direction. The Y-axis sensor 25Y is provided having an orientation for detecting displacements in the Y-direction and Z-direction. The Z-axis sensor 25Z is provided having an orientation for detecting displacements in the Z-direction and X-direction. Such arrangement of the two-dimensional scales, for example, enables effective detection of an error having a relatively large influence upon processing in a processing machine envisioned as positioning the movable portion (saddle 13) in the Y-direction.

In the X-axis sensor 25X, one of the scale portion 27 and the detection portion 29 (detection portion 29 in the example shown) is directly or indirectly fixed to the X-axis table 9X. The other of the scale portion 27 and the detection portion 29 (scale portion 27 in the example shown) is directly or indirectly fixed with respect to the X-axis bed 19X. Accordingly, if the X-axis table 9X moves, the scale portion 27 and the detection portion 29 relatively move. Due to this, displacement (position) of the X-axis table 9X is detected. In more detail, for example, this is as follows.

On the upper surface of the base 7, an X-axis scale placement portion 21X is provided. The scale portion 27 of the X-axis sensor 25X is provided at the upper surface of the X-axis scale placement portion 21X, extends in the X-direction, and has a width in the Z-direction. The detection portion 29 of the X-axis sensor 25X is supported by a support member (notation is omitted) having a suitable shape and dimensions which is fixed to the X-axis table 9X and the detection portion 29 faces the scale portion 27 from the upper part. As explained in the explanation of the outline of the embodiment, the X-axis sensor 25X is positioned on the side closer to the virtual plane VP (plane passing through the workpiece rotation axis AW and parallel to the XZ plane) than the X-axis guide 17X. In more detail, it is positioned in the virtual plane VP.

In the Y-axis sensor 25Y, one of the scale portion 27 and the detection portion 29 (detection portion 29 in the example shown) is directly or indirectly fixed to the saddle 13. The other of the scale portion 27 and the detection portion 29 (scale portion 27 in the example shown) is directly or indirectly fixed to the column 11. Accordingly, when the saddle 13 moves, the scale portion 27 and the detection portion 29 relatively move. Due to this, displacement (position) of the saddle 13 is detected. In more detail, for example, this is as follows.

A Y-axis scale placement portion 21Y is provided on the upper surface of the X-axis table 9X. The scale portion 27 of the Y-axis sensor 25Y is provided at the side surface of the Y-axis scale placement portion 21Y facing the X-direction, extends in the Y-direction, and has a width in the Z-direction. The detection portion 29 of the Y-axis sensor 25Y is supported by a support member (notation is omitted) having a suitable shape and dimensions which is fixed to the saddle 13 and the detection portion 29 faces the scale portion 27 in the X-direction. The support member, in the example shown, passes through the column 11 in the Z-direction. The Y-axis sensor 25Y is positioned on closer to the virtual plane VP (plane which passes through the tool rotation axis AT and is parallel to the YZ plane) than the Y-axis guide 17Y. In more detail, it is positioned in the virtual plane VP.

In the Z-axis sensor 25Z, one of the scale portion 27 and the detection portion 29 (detection portion 29 in the example shown) is directly or indirectly fixed to the Z-axis table 9Z. The other of the scale portion 27 and the detection portion 29 (scale portion 27 in the example shown) is directly or indirectly fixed with respect to the Z-axis bed 19Z. Accordingly, when the Z-axis table 9Z moves, the scale portion 27 and the detection portion 29 move relative to each other. Due to this, displacement (position) of the Z-axis table 9Z is detected. In more detail, for example, this is as follows.

A Z-axis scale placement portion 21Z is provided on the upper surface of a portion of the X-axis bed 19X extended to the side of the Z-axis bed 19Z. The scale portion 27 of the Z-axis sensor 25Z is provided at the upper surface of the Z-axis scale placement portion 21Z, extends in the Z-direction, and has a width in the X-direction. The detection portion 29 of the Z-axis sensor 25Z is supported by a support member (notation is omitted) having a suitable shape and dimensions which is fixed to the Z-axis table 9Z and the detection portion 29 faces the scale portion 27 from the upper part. The Z-axis sensor 25Z is positioned closer to the virtual plane VP (plane which passes through the workpiece rotation axis AW and is parallel to the XZ plane) than the Z-axis guide 17Z. In more detail, it is positioned in the virtual plane VP.

When referring to the distance from the virtual plane VP to the two-dimensional scale (25X, 25Y, or 25Z) or comparing the position of the two-dimensional scale and the position of the linear guide (17X, 17Y, or 17Z) in the normal direction of the virtual plane VP, the position of the two-dimensional scale may use as a reference a portion directly contributing to detection as a reference. For example, it may use as a reference the surface of the scale portion 27 which faces the detection portion 29 (from another viewpoint, the surface parallel to the virtual plane VP). For example, in the X-axis sensor 25X, the position of the upper surface of the scale portion 27 (however, the region facing the detection portion 29) may be used as a reference.

Further, the position of the linear guide may also use as a reference a portion positioned closer to the virtual plane VP in the portion directly contributing to guiding the movable portion so that the requirement that the two-dimensional scale be positioned closer to the virtual plane VP than the linear guide is judged relatively strictly. For example, at the X-axis guide 17X, an upper end of the regions which contact not shown rollers at the surfaces (inclined surfaces) of the ridges at the lower surface of the X-axis table 9X may be used as the reference.

When referring to the "two-dimensional scale is positioned in the virtual plane VP", it is not necessary for the reference of the position of the two-dimensional scale (for example the surface of the scale portion 27) to be exactly positioned in the virtual plane VP as explained above. For example, the two-dimensional scale may be grasped as being positioned in the virtual plane VP in a case where the distance of the two is not more than 5 times, not more than 2 times, or not more than 1 time of the distance (gap) between the scale portion 27 and the detection portion 29. The gap is for example 2 mm or less or 1 mm or less.

In each axis, the detection portion 29 of the two-dimensional scale may be positioned in the vicinity of the processing point in the direction in which the movable portion (9X, 13, or 9Z)) should move. In other words, the detection portion 29 may be positioned in the vicinity of a virtual plane (not shown) including the processing point and perpendicular to the direction in which the movable portion should move (for example, in the virtual plane). Further, in the other words, the detection portion 29 may be positioned in the vicinity of the intersection of the above perpendicular virtual plane (not shown) and the virtual plane VP (for example within the intersection). In place of the processing point, the front end of the spindle (15W or 15T) supported by the movable portion and the position of the spindle on the rotation axis may be used as reference points as well. The reference position of the detection portion 29 may be made the center of the portion substantially contributing to the detection. The "vicinity" of the above perpendicular virtual plane (not shown) or the "vicinity" of the intersection may be made for example less than 1/2, less than 1/3, less than 1/5, or less than 1/10 of the distance from the virtual plane VP to the linear guide.

For example, the detection portion 29 of the X-axis sensor 25X may be arranged in the vicinity of the virtual plane perpendicular to the X-direction and including the tool rotation axis AT (example shown). The detection portion 29 of the Z-axis sensor 25Z, unlike the example shown, may also be arranged in the vicinity of the virtual plane perpendicular to the Z-direction and including the front end of the workpiece spindle 15W. The detection portion 29 of the Y-axis sensor 25Y, unlike the example shown, may be arranged in the vicinity of the virtual plane perpendicular to the Y-direction and including the front end of the tool spindle 15T. By such an arrangement, for example, as will be understood from the explanation of the influence of yaw which will be explained later (section 4.2), the necessity of converting the rotation error about the axis perpendicular to the two directions in which the two-dimensional scale detects position as the error of the processing point in the transverse direction of the two-dimensional scale is reduced.

(2.3. Scale Placement Portion)

The positions, shapes, and dimensions etc. of the scale placement portions (21X, 21Y, and 21Z) may be suitably set so that the two-dimensional scales (17X, 17Y, and 17Z) can be arranged at desired positions. In the example shown, this is as follows.

The shape of the scale placement portion is made a rectangular parallelepiped shape. Further, the scale placement portion is formed as a solid (not hollow) metal member. In other words, the scale placement portion is integrally formed by metal. When referred to in this way, the shapes of detailed parts need not be considered. As shapes of detailed parts, for example, there can be mentioned the shape of the portion for attaching the scale placement portion to the base 7 or the like and the shape of the portion for attaching the two-dimensional scale to the scale placement portion. From another viewpoint, for example, there can be mentioned a female screw, a through-hole (hole which is not a female screw) through which a bolt is inserted, or a recessed portion in which a portion of any member is engaged. The type of metal is arbitrary. For example, it is cast iron.

In each axis, the scale placement portion is supported by a member different from the member (fixed portion) which supports the movable portion through the linear guide (for example the support member supporting the fixed portion). Further, the scale placement portion is spaced apart from the fixed portion. Specifically, this is as follows.

The X-axis scale placement portion 21X is not supported by the X-axis bed 19X, but is supported upon the base 7. Further, the X-axis scale placement portion 21X is spaced apart from the X-axis bed 19X in the Z-direction.

The Y-axis scale placement portion 21Y is not supported by the column 11, but is supported upon the X-axis table 9X. Further, the Y-axis scale placement portion 21Y is spaced apart from the column 11 in the Z-direction.

The Z-axis scale placement portion 21Z is not supported by the Z-axis bed 19Z, but supported upon the extended portion of the X-axis bed 19X. Further, the Z-axis scale placement portion 21Z is spaced apart from the Z-axis bed 19Z in the X-direction.

In each axis, the distance between the scale placement portion and the fixed portion (19X, 11, or 19Z) is arbitrary so long as the two so not contact. For example, it may be less than 1 cm or may be 1 cm or more.

Note that, unlike the example shown, the scale placement portion may be configured by a combination of a plurality of members, may have a cavity, or may be supported by a fixed portion.

(3. Control System)

(3.1. Control System of Plurality of Axes)

(3.1.1. Outline of Control)

FIG. 4 is a block diagram showing the configuration of the control system in the processing machine 1.

On the left side in FIG. 4, the movable portions (9X, 13, and 9Z) of 3 axes, two-dimensional scales (25X, 25Y, and 25Z) of 3 axes, and the electric motors (23X, 23Y, and 23Z) which drive the movable portions of 3 axes are schematically shown. Further, on the right side in FIG. 4, the configuration of the controller 5 is shown.

The controller 5 has a signal processing part 34 which processes the signals from the two-dimensional scales of the three axes and a control body part 35 which controls the electric motors of the three axes based on the signals from the signal processing part 34. The signal processing part 34, for each axis, has an input processing part (31X, 31Y, or 31Z) and two correction parts (31Xx and 31Xz, 31Yy and 31Yz, or 31Zx and 31Zz). The control body part 35, for each axis, has a control part (33X, 33Y, or 33Z) which controls the electric motor.

The input processing part (31X, 31Y, or 31Z) of each axis identifies the displacement and rotation error in two directions based on the signal input from the two-dimensional scale. In each axis, each correction part (32Xx or the like), as will be explained in detail later, corrects the displacement in at least one of the two directions identified by the input processing part based on the rotation error identified by the input processing part. In each axis, one of the displacements in two directions (displacement in the direction in which the movable portion should move) is utilized for usual feedback control. The remaining one (error) is utilized for control of the other axis in order to cancel out the influence of the error exerted upon the relative positions of the tool 101 and the workpiece 103.

Note that, the signal processing part 34, control body part 35, input processing part, correction part, and control part (33X, 33Y, or 33Z) for each axis are functional or conceptual classifications. Accordingly, for example, from the viewpoint of hardware, these control parts may be integrally configured or may be configured dispersed. Further, the control part (33X, 33Y, or 33Z) may be grasped to include a driver or may be grasped to include no driver (from another viewpoint, in FIG. 4, illustration of the driver is omitted).

In general, the term the "sensor" sometimes designates only a transducer which converts a physical quantity to a signal and sometimes designates a device including a transducer and a function part connected to this. As the function part, for example, there can be mentioned a driver which supplies electric power to the transducer and a computation part which performs processing of the signal from the transducer. Also in the present embodiment, the two-dimensional scale may be any of them. Further, as explained above, the illustrated parts are functional or conceptual. Therefore, at the distribution stage etc. of a two-dimensional scale, a portion of the signal processing part 34 (for example input processing part (31X, 31Y, or 31Z)) may be made a portion of the two-dimensional scale as well.

(3.1.2. Signal Processing)

The meanings of the notations attached to signal paths from the input processing parts (31X, 31Y, or 31Z) to the correction parts (32Xx etc.) are as follows. Note that, in the following explanation, for convenience, the saddle 13 will be referred to as the "Y-axis table". Further, notations which are not shown in FIG. 4, but are shown in FIG. 8 will be shown as well.

XPosX: "Displacement" of "X"-axis table in "X" direction
XPosY: "Displacement" (error) of "X"-axis table in "Y" direction
XPosZ: "Displacement" (error) of "X"-axis table in "Z" direction
YPosX: "Displacement" (error) of "Y"-axis table in "X" direction
YPosY: "Displacement" of "Y"-axis table in "Y" direction
YPosZ: "Displacement" (error) of "Y"-axis table in "Z" direction
ZPosX: "Displacement" (error) of "Z"-axis table in "X" direction
ZPosY: "Displacement" (error) of "Z"-axis table in "Y" direction
ZPosZ: "Displacement" of "Z"-axis table in "Z" direction
XRotX: "Rotation error" of "X"-axis table about "X"-axis
XRotY: "Rotation error" of "X"-axis table about "Y"-axis
XRotZ: "Rotation error" of "X"-axis table about "Z"-axis
YRotX: "Rotation error" of "Y"-axis table about "X"-axis
YRotY: "Rotation error" of "Y"-axis table about "Y"-axis
YRotZ: "Rotation error" of "Y"-axis table about "Z"-axis
ZRotX: "Rotation error" of "Z"-axis table about "X"-axis
ZRotY: "Rotation error" of "Z"-axis table about "Y"-axis
ZRotZ: "Rotation error" of "Z"-axis table about "Z"-axis

The operations of the input processing part and correction part are as already explained. However, just in case, notations will be attached for each axis and explained.

The X-axis input processing part 31X identifies the displacement (XPosX) in X-direction and displacement (XPosZ) in Z-direction of the X-axis table 9X and the rotation error (XRotY) about the Y-axis based on the signal from the X-axis sensor 25X. The correction part 32Xx corrects XPosX based on XRotY. The correction part 32Xz corrects XPosZ based on XRotY.

The Y-axis input processing part 31Y identifies the displacement (YPosY) in Y-direction and displacement (YPosZ) in Z-direction of the saddle 13 and the rotation error (YRotX) about the X-axis based on the signal from the Y-axis sensor 25Y. The correction part 32Yy corrects YPosY based on YRotX. The correction part 32Yz corrects YPosZ based on YRotX.

The Z-axis input processing part 31Z identifies the displacement (ZPosZ) in Z-direction and displacement (ZPosX) in X-direction of the Z-axis table 9Z and the rotation error (ZRotY) about the Y-axis based on the signal from the Z-axis sensor 25Z. The correction part 32Zz corrects ZPosZ based on ZRotY. The correction part 32Zx corrects ZPosX? based on ZRotY.

In each axis, for example, three signals generated by three detection parts (29a, 29b, and 29a) are input from the two-dimensional scale to the input processing part (31X, 31Y, or 31Z). Each signal is for example a pulse signal of one pattern 27c passing right under the detection part (29a, 29b or 29a) and one waveform (pulse wave) corresponding to each other. The pulse wave is for example a sine wave, rectangular wave, triangular wave, or sawtooth wave.

The input processing part (31X, 31Y, or 31Z) of each axis, for example, based on the input three signals, performs computations equivalent to equation (3) to equation (6) and identifies displacements in two directions and rotation error. A specific example of correction by the correction part will be explained later (section 4).

(3.1.3. Feedback Control)

As already explained, in each axis, the detected displacement in the direction in which the movable portion (9X, 13, or 9Z) should move is utilized for feedback control of the direction (usual feedback control). Specifically, this is as follows.

The displacement (signal SXx) of the X-axis table 9X in the X-direction calculated by the correction part 32Xx is utilized by the X-axis control part 33X for full closed loop control of the X-axis motor 23X which drives the X-axis table 9X. The displacement (signal SYy) of the saddle 13 in the Y-direction which is calculated by the correction part 32Yy is utilized by the Y-axis control part 33Y for full closed loop control of the Y-axis motor 23Y which drives the saddle 13. The displacement (signal SZz) of the Z-axis table 9Z in the Z-direction calculated by the correction part 32Zz is utilized by the Z-axis control part 33Z for full closed loop control of the Z-axis motor 23Z which drives the Z-axis table 9Z.

(3.1.4. Compensation for Error)

As already explained, in each axis, the detected displacement (detected error) in the direction perpendicular to the direction in which the movable portion should move is utilized for control for reducing the error of the relative positions of the tool 101 and the workpiece 103 caused by such error. Specifically, this is as follows.

The error (signal SXz) of the X-axis table 9X in the Z-direction calculated by the correction part 32Xz is added by an addition part 36Z to the displacement (signal SZz) in the Z-direction calculated by the correction part 32Zz and is input to the Z-axis control part 33Z. For convenience, this is expressed as "addition", however, computation is carried out so that the original control amount (movement amount based on the signal SZz) of the Z-axis table 9Z is corrected in the same direction and by the same amount as the error of the X-axis table 9X in the Z-direction (actual computation in the control part may be subtraction as well, same is true for the following explanation).

The error (signal SYz) of the saddle 13 in the Z-direction calculated by the correction part 32Yz is added by the addition part 36Z to the displacement (signal SZz) in the Z-direction calculated by the correction part 32Zz and is input to the Z-axis control part 33Z. For convenience, this is expressed as "addition", however, computation is carried out so that the original control amount of the Z-axis table 9Z (from another viewpoint, the movement amount based on the signal SZz) is corrected in the same direction and by the same amount as the error of the saddle 13 in the Z-direction.

The error (signal SZx) of the Z-axis table 9Z in the X-direction calculated by the correction part 32Zx is added by an addition part 36X to the displacement (signal SXx) in the X-direction calculated by the correction part 32Xx and is input to the X-axis control part 33X. For convenience, this is expressed as "addition", however, for example, computation is carried out so that the original control amount (from another viewpoint, movement amount based on the signal SXx) of the X-axis table 9X is corrected in the same direction and by the same amount as the error of the Z-axis table 9Z in the Z-direction.

In the control part (33X, 33Y, or 33Z) of each axis, acquisition of position based on the signal from the signal processing part 34 and control of the electric motor (23X, 23Y, or 23Z) based on the acquired position are repeatedly carried out in a predetermined control cycle. The control cycles in the control parts (33X, 33Y, or 33Z) of the three axes are for example the same as each other (may be able to be different) and are synchronized.

The input processing part (31X, 31Y, or 31Z) of each axis, for example, acquires the signal from the two-dimensional scale (25X, 25Y, or 25Z) in the predetermined sampling cycle and calculates the displacements in two directions and rotation error (detected values). The sampling cycles in the input processing parts (31X, 31Y, and 31Z) of the three axes are for example the same as each other (may be able to be different) and are synchronized.

The sampling cycle, for example, may be made the same as or shorter than the control cycle. In any case, in the control for each control cycle, raw detected values (processing not applied) may be used or detected values subjected to any processing may be used.

For example, the displacement (XPosX, YPosY, or _ZPosZ) in the direction (first direction) in which the movable portion (9X, 13, or 9Z) of each axis should move, which is used by the control part (33X, 33Y, or 33Z) of each axis, may be made the newest raw detected value. Due to this, for example, the probability of occurrence of control delay with respect to the actual position in the first direction can be reduced.

On the other hand, the error (XPosZ, YPosZ, ZPosX, XRotY, YRotX, or ZRotY) used by the control part (33X, 33Y, or 33Z) of each axis may be made a mean value of a predetermined number of (for example 10) detected values including the newest detected value. Due to this, for example, the probability of excessive response to a specific error is reduced.

Specific values of the sampling cycle and control cycle may be suitably set in accordance with the precision demanded from the processing machine 1 and the like and are not particularly limited. When showing an example, the sampling cycle and/or control cycle may be made 0.02 sec or less, 0.01 sec or less, or 0.005 sec or less.

(3.2. Control System in Each Axis)

FIG. 5 is a block diagram showing one example of the configuration of the control system in each axis. Here, the configuration relating to control for driving the Z-axis table 9Z is taken as an example.

As explained with reference to FIG. 4, in the control for driving the Z-axis table 9Z, not only the detected value of the Z-axis sensor 25Z, but also the detected values of the X-axis sensor 25X and Y-axis sensor 25Y may be utilized. Here, first, control based on the detected value of the Z-axis sensor 25Z is explained. After that, examples of utilization of the detected values of the X-axis sensor 25X and Y-axis sensor 25Y will be explained. In the explanation of the control based on the detected value of the Z-axis sensor 25Z, for convenience, expressions that ignore the presence of the X-axis sensor 25X and Y-axis sensor 25Y will sometimes be used.

(3.2.1. Control of Z-Axis Based on Z-Axis Sensor)

The control for driving the Z-axis table 9Z based on the detected value (signal SZz) of the Z-axis sensor 25Z, for example, may be made the same as a general control in a machine tool. For example, this is as follows. Note that, described just in case, as explained with reference to FIG. 4, the signal SZz is one corrected by the correction part 32Zz. Accordingly, even if the procedure of the control which will be explained below is general, the control is substantially different from a general one as a whole.

The NC program 107 includes information of commands relating to drive of each axis. For example, the NC program 107 includes information of commands relating to movements of the X-axis table 9X, Z-axis table 9Z, and saddle 13. The information of a command relating to movement, for example includes a plurality of positions on a path of movement and information of the speed between two or more positions.

An interpretation part 39 of the controller 5 reads out an NC program 107 and interprets it. Due to this, for example, for each of the tables (9X and 9Z) and saddle 13, a plurality of positions through which the table etc. passes in order and the information of the speed between two or more positions are acquired.

An interpolation part 41 of the controller 5 calculates a target position etc. for each predetermined control cycle based on the information acquired by the interpretation part 39. For example, based on the two positions through which it passes in order and the speed between those two positions, a plurality of target positions at which it must arrive in order for each control cycle is set between the two positions. The interpolation part 41, for each axis, calculates the target position etc. for each control cycle and outputs the result. In FIG. 5, the target position for each control cycle of the Z-axis table 9Z is output to the addition part 43 of the controller 5.

The addition part 43, in addition to the above target position, receives as input the detected position (signal SZz) of the Z-axis table 9Z in the Z-direction which is detected by the Z-axis sensor 25Z. The addition part 43 calculates the deviation between the target position and the detected position. The calculated deviation (target movement amount for each control cycle) is input to the position control part 45 of the controller 5.

The position control part 45 multiplies the input deviation by a predetermined gain to calculate the target speed for each control cycle and outputs the result to the addition part 47 of the controller 5. The addition part 47 receives as input the detected speed of the Z-axis table 9Z in the Z-direction in addition to the above target speed. The detected speed is calculated by differentiation of the detected position in the Z-direction detected by the Z-axis sensor 25Z by a differentiation part 55. The addition part 47 calculates deviation between the target speed and the detected position and outputs the result to the speed control part 49 of the controller 5.

The speed control part 49 multiplies the input deviation by a predetermined gain to calculate target current (target torque) for each control cycle and outputs the result to the addition part 51 of the controller 5. The addition part 51 calculates a deviation between the input target current for each control cycle and the detection current from a not shown current detection part and outputs the result to a current control part 53 of the controller 5. The current control part 53 supplies electric power in accordance with the input deviation to the Z-axis motor 23Z.

(3.2.2. Control of Z-Axis Based on Sensors of Other Axes)

The addition part 36Z shown also in FIG. 4 is positioned in the path shown in FIG. 5 from the Z-axis sensor 25Z up to the addition part 43. Accordingly, the detected position of the Z-axis table 9Z which is input to the addition part 43 becomes one corrected by the addition part 36Z.

Specifically, from the detected position of the Z-axis table 9Z, the position error (signal SXz) of the X-axis table 9X in the Z-direction is subtracted and the position error (signal SYz) of the saddle 13 in the Z-direction is subtracted. From another viewpoint, it can be grasped that the above position errors (signals SXz and SYz) are added to the deviation which is calculated by the addition part 43 based on only the detected position (signal SZz) of the Z-axis table 9Z.

As a result, for example, the position of the Z-axis table 9Z is controlled so as to increase the movement amount of the Z-axis table 9Z in the same direction and by the same amount as the above position errors (signals SXz and SYz). Due to this, the influence of the position errors of the other axes exerted upon the relative positions of the tool 101 and the workpiece 103 is cancelled by the movement of the Z-axis table 9Z.

Further, the addition part 36Z is positioned in front of a branch of the path from the Z-axis sensor 25Z to the differentiation part 55. That is, the detected position of the Z-axis table 9Z input to the differentiation part 55 becomes one corrected by the addition part 36Z, and in turn the detected speed of the Z-axis table 9Z which is input to the addition part 47 becomes one indirectly corrected by the addition part 36Z.

Specifically, the detected speed input to the addition part 47 becomes the detected speed of the Z-axis table 9Z minus the speed error of the X-axis table 9X in the Z-direction and minus the speed error of the saddle 13 in the Z-direction. From another viewpoint, it can be grasped that the above speed error is added with respect to the deviation which is calculated by the addition part 47 based on only the detected speed of the Z-axis table 9Z.

As a result, for example, the speed of the Z-axis table 9Z is controlled so as to increase the speed of the Z-axis table 9Z in the same direction and by the same amount as the above speed errors (signals SXz and SYz). Due to this, the influence by the speed errors of the other axes exerted upon the relative speeds of the tool 101 and the workpiece 103 is cancelled by the movement of the Z-axis table 9Z.

The Z-axis table 9Z holds one of the tool 101 and the workpiece 103 (workpiece 103 in FIG. 1), and the X-axis table 9X (or saddle 13) holds the other of the tool 101 and workpiece 103 (tool 101 in FIG. 1). From this, the error of the X-axis table 9X (or saddle 13) is subtracted from the displacement of the Z-axis table 9Z as explained above. Unlike the above explanation, in an example where the two movable portions hold the tool 101 together or hold the workpiece 103 together, conversely from the above explanation, the error of one movable portion may be added (narrow sense excluding subtraction) to the displacement of the other movable portion. That is, the movable portion may be controlled so as to move to the inverse side to the error of the other axis by the same amount as the error.

For example, in a second embodiment which will be explained later, the error (XPosY in FIG. 8) of the X-axis table 9X in the Y-direction is also detected by the X-axis sensor 225X. This error may be added (narrow sense) to the displacement (YPosY in FIG. 8) of the saddle 13 in the Y-direction which is detected by the Y-axis sensor 25Y. Due to this, the influence by the error exerted upon the relative positions of the tool 101 and the workpiece 103 is cancelled out.

Note that, the above explanation is a conceptual one in a case where the signs in the orthogonal coordinate system XYZ shown in FIG. 1 are applied to the control as they are. Accordingly, for example, in computation in the controller 5 in actuality, the signs may be inverse to those in the above explanation as well.

(3.2.3. Addendum)

In the above explanation, the control relating to movement of the Z-axis table 9Z was explained. However, the above explanation may be suitably utilized for control relating to movements of the movable portions of the other axes (in the present embodiment, the X-axis table 9X and saddle 13). It is apparent that the explanation in section 3.2.1. can be utilized for the movable portions of the other axes. Further, the explanation in section 3.2.2. may be suitably utilized in accordance with the configuration of the entire control system (FIG. 4 and FIG. 8 which will be explained later and the like).

For example, as understood from FIG. 4, in the first embodiment, the detected value of the Y-axis sensor 25Y is not utilized for control relating to the X-axis table 9X. Accordingly, in the first embodiment, when citing the explanation of section 3.2.2. for the explanation of the X-axis table 9X, the explanation relating to the Y-axis sensor 25Y is deleted, and the term of "X" and the term of "Z" are replaced with each other. Further, in the first embodiment, the control relating to the saddle 13 does not utilize the detected values of the sensors of the other axes. Accordingly, it is not necessary to cite the explanation in section 3.2.2. for the explanation of the saddle 13.

The configurations shown in FIG. 4 and FIG. 5 are in the end examples and may be suitably modified. For example, although not particularly shown, in FIG. 5, feed-forward control may be added as well. An acceleration loop may be inserted in place of the current loop. Where provision is made of a rotation sensor (for example encoder or resolver) which detects the rotation of the electric motor (23Z etc.), the speed control may be carried out based on the detected value of that rotation sensor as well. In the feed-forward and acceleration loop, the errors of the other axes (X-axis and Y-axis in FIG. 5) may be utilized as well.

In the example in FIG. 5, the errors of the speeds of the other axes (for example X-axis) are included in the control of the Z-axis by the errors of displacements of the other axes and the displacement of the Z-axis being added to each other and differentiated together. However, the errors of displacements of the other axes may be separately differentiated from the displacement of the Z-axis to find the error of the speed, then the errors of the speeds of the other axes and the error of the speed of the Z-axis may be added to each other.

In the example in FIG. 5, the errors of displacements of the other axes were input to the addition part 43 through the addition part 36Z. However, in place of input to the addition part 43, the errors may be input to the interpolation part 41 and utilized for calculation of the target position for each control cycle. In the same way, the errors of the speeds of the other axes need not be input to the addition part 47 through the addition part 36Z, but may be calculated separately from the speed of the Z-axis as explained above and utilized for calculation of the target speed by the position control part 45.

Note that, in FIG. 5, the interpretation part 39 to the current control part 53 (including the differentiation part 55) correspond to the control body part 35 in FIG. 4. The position control part 45 to the current control part 53 (including the differentiation part 55) correspond to the Z-axis control part 33Z.

(4. Calculation Method of Influence of Rotation Error)

When rotation error arises in a movable portion (9X, 13, or 9Z), that rotation error exerts an influence upon the relative positions of the tool 101 and the workpiece 103 (processing point from another viewpoint). The correction part shown in FIG. 4 (32Xx, 32Xz, 32Yy, 32Yz, 32Zz, or 32Zx) for example converts the rotation error of the movable portion to error of the relative positions of the tool 101 and the workpiece 103 and adds (broad sense) the result to the displacement. The calculation method of the conversion may be a suitable one. An example will be shown below.

Rotation about an axis parallel to the direction in which the movable portion (9X, 13, or 9Z) should move will be referred to as "roll". For example, concerning the Z-axis table 9Z, the roll is rotation about the Z-axis. Further, rotation about an axis parallel to the direction in which the movable portion is supported by the linear guide will be referred to as "yaw". For example, concerning the Z-axis table 9Z, yaw is rotation about the Y-axis. Further, rotation about an axis perpendicular to the above two axes will be referred to as "pitch". For example, concerning the Z-axis table 9Z, the pitch is rotation about the X-axis.

In the first embodiment, roll is not detected for any axis. In turn, in the first embodiment, roll is not converted to error of the relative positions of the tool 101 and the workpiece 103. However, the explanation relating to roll is useful for understanding the effect by making the position of the two-dimensional scale approach the virtual plane VP. Further, it is useful for understanding the second embodiment which will be explained later.

In the following explanation, mainly the Z-axis table 9Z will be taken as an example for the explanation. However, it is clear that the following explanation can be utilized for the other axes. Further, in the following explanation, for convenience, sometimes the signs of the values will not be strictly handled.

(4.1. Influence of Roll)

FIG. 6 is a schematic view for explaining the influence of roll of the Z-axis table 9Z exerted upon the position of the workpiece rotation axis AW (from another viewpoint, the relative positions of the tool 101 and the workpiece 103). Note that, the position of the workpiece rotation axis AW may be grasped as the position of the processing point when viewed in the Z-direction. Here, a state where the Z-axis guide 17Z on the -X side between the two Z-axis guides 17Z becomes the rotation center of the roll is assumed.

The positions or dimensions etc. shown by the notations attached in FIG. 6 are as follows.

Cr: Rotation center of roll (roll center)
Lr: Distance in X-direction from roll center to workpiece rotation axis AW
hr: Distance in Y-direction from roll center to workpiece rotation axis AW
θr: Angle formed by line connecting roll center and workpiece rotation axis AW with respect to Y-axis
rr: Distance from roll center to workpiece rotation axis AW (rotation radius)
ar: Change of angle generated by roll (rotation error)
dLr: Displacement in X-direction generated by roll (error)
dhr: Displacement in Y-direction generated by roll (error)

When the meanings of notation are defined as explained above, the following equation stands.

$$\mathtt{dLr=rr\times sin(\theta r+\alpha r)-rr\times sin(\theta r)}$$

$$\mathtt{=rr\{sin(\theta r+\alpha r)-rr\times sin(\theta r)\}}$$

$$\mathtt{=rr\{sin(\theta r)cos(\alpha r)+cos(\theta r)sin(\alpha r)-sin(\theta r)\}}$$

Here, ar is very small, therefore it can be approximated in the following way.

$$\mathtt{cos(\alpha r)=1}$$

$$\sin(\alpha r) = \alpha r$$

When the above approximation equation is entered into the calculation equation dLr, the following equation is obtained.

$$dLr \approx rr \times \{\sin(\theta r) + \cos(\theta r) \times \alpha r - \sin(\theta r)\}$$

$$= rr \times \alpha r \times \cos(\theta r)$$

$$= rr \times \alpha r \times hr/rr$$

$$= \alpha r \times hr$$

That is,

$$dLr \approx \alpha r \times hr$$

In the same way, dhr can be calculated. Specifically, first, the following equation stands.

$$dhr = rr \times \cos(\theta r) - rr \times \sin(\theta r + \alpha r)$$

$$= rr\{\cos(\theta r) - \sin(\theta r + \alpha r)\}$$

$$= rr\{\cos(\theta r) - \cos(\theta r)\cos(\alpha r) + \sin(\theta r)\sin(\alpha r)\}$$

When entering the already explained approximation equation into the above equation, the following equation is obtained.

$$dhr \approx rr\{\cos(\theta r) - \cos(\theta r) + \sin(\theta r) \times \alpha r\}$$

$$= rr \times \alpha r \times \sin(\theta r)$$

$$= rr \times \alpha r \times Lr/rr$$

$$= \alpha r \times Lr$$

That is,

$$dhr \approx \alpha r \times Lr$$

The equation dLr≈ar×hr shows that the value of dLr is determined by ar and hr, but not by Lr and θr. That is, in the virtual plane VP including the workpiece rotation axis AW, the value of dLr is the same at any position. Accordingly, when the Z-axis sensor 25Z is positioned in the virtual plane VP, the Z-axis sensor 25Z can detect deviation including the error dLr in the X-direction in the workpiece rotation axis AW due to the rotation error $\alpha r$ by the roll as it is. Further, even if the Z-axis sensor 25Z is not positioned in the virtual plane VP, the error dLr is reflected more upon the error in the X-direction which is detected by the Z-axis sensor 25Z as the Z-axis sensor 25Z becomes closer to the virtual plane VP. That is, the precision of detection of the error by the Z-axis sensor 25Z is substantially improved.

Note that, as will be understood also from the above explanation, the effect stands so long as the roll center Cr is positioned at the same height as the Z-axis guide 17Z. Further, in an example where two Z-axis guides 17Z are provided as in the present embodiment, a probability of that the roll center Cr becoming the position of any Z-axis guide 17Z is high. Accordingly, for example, for convenience of explanation, the Z-axis guide 17Z on the -X side was defined as the roll center Cr. However, the above equation is applied to many cases. Further, the above effect is exerted in many cases.

Unlike the first embodiment, in an example where roll is detected (for example the second embodiment), according to the equation $dLr=\alpha r\times hr$, the rotation error in the roll may be converted to displacement error in the X-direction and added to the displacement error in the X-direction which is detected by the Z-axis sensor 25Z. However, as hr, use is made of the distance (0 in the example in FIG. 6) in the Y-direction between the workpiece rotation axis AW (processing point) and the Z-axis sensor 25Z. Due to this, in the error exerted by the rotation error $\alpha r$ upon the displacement in X-direction of the workpiece rotation axis AW, the portion which is not detected by the Z-axis sensor 25Z is calculated as dLr.

Note that, as understood from the above explanation, in the present embodiment, the distance in the Y-direction between the workpiece rotation axis AW and the Z-axis sensor 25Z is 0. Therefore, even if roll is detected, dLr in the case where the distance is hr is 0. That is, dLr of the roll need not be calculated either. From this viewpoint as well, the effect by positioning of the two-dimensional scale in the virtual plane VP can be explained.

In the same way, in the example where roll is detected (for example second embodiment), the rotation error in roll may be converted to displacement error in the Y-direction by the equation $dhr=\alpha r\times Lr$ and be added to the displacement error in the Y-direction which is detected by a Z-axis auxiliary scale 26Z (FIG. 8) explained later. However, as Lr, use is made of the distance in the X-direction between the workpiece rotation axis AW (processing point) and the Z-axis auxiliary scale 26Z. Due to this, in the error exerted by the rotation error $\alpha r$ upon the displacement in the Y-direction of the workpiece rotation axis AW, the portion which is not detected by the Z-axis auxiliary scale 26Z is calculated as dhr.

(4.2. Influence of Yaw)

FIG. 7 is a schematic view for explaining the influence by yaw of the Z-axis table 9Z exerted upon the position of the front end position of the workpiece spindle 15W (from another viewpoint, the processing point). In FIG. 7, for convenience, notation of the processing point Pp is attached to the workpiece rotation axis AW and to the front end of the workpiece spindle 15W. Also in an actual processing machine 1, the computation may be carried out by using the front end position of the workpiece spindle 15W as the position of the processing point Pp as well.

The positions or dimensions etc. shown by notations attached in FIG. 7 are as follows.

Cy: Rotation center of yaw (yaw center)
Ly: Distance in X-direction from yaw center to processing point
wy: Distance in Z-direction from yaw center to processing point
$\theta y$: Angle formed by line connecting yaw center and processing point with respect to Z-axis
ry: Distance from yaw center to processing point (rotation radius)
$\alpha y$: Change of angle caused by yaw (rotation error)
dLy: Displacement in X-direction caused by yaw (error)
dwy: Displacement in Z-direction caused by yaw (error)

The directions of the errors dwy and dLy due to the rotation error $\alpha y$ relating to yaw are both directions in which displacement is detected by the Z-axis sensor 25Z. Further, as already explained, the Z-axis table 9Z and X-axis table 9X are controlled based on the displacement detected by the Z-axis sensor 25Z. Accordingly, irrespective of the position of the rotation center of yaw in the absolute coordinate system, in the control, the position of the Z-axis sensor 25Z may be regarded as the rotation center of yaw, and wy and dLy due to $\alpha y$ may be calculated and added to the displacement detected by the Z-axis sensor 25Z.

When each notation is defined as explained above, the following equations can be derived. Note that, they can be derived in the same way as dLr and dhr, therefore the process of derivation of the following equations is omitted.

$$dLy\approx\alpha y\times wr$$

$$dwy\approx\alpha y\times Ly$$

Further, the correction part 32Zx shown in FIG. 4 may calculate the correction amount of ZPozX based on ZRotY($=\alpha y$) by $dLy=\alpha y\times wr$. Further, the correction part 32Zz may calculate the correction amount of ZPozZ based on ZRotY($=\alpha y$) by $dwy=\alpha y\times Ly$.

(4.3. Influence of Pitch)

In the first embodiment, concerning the saddle 13 (Y-axis), the rotation error relating to pitch is detected. It is clear that the explanation of yaw can be utilized for pitch. Accordingly, explanations of the equation converting the rotation error relating to pitch to displacements in two directions which are perpendicular to the rotation axis of the pitch and the like are omitted.

(5. Processing System)

Returning to FIG. 1, the processing machine 1 may be connected to a diagnostic device 93 by utilizing a technique such as OpenCNC (computerized numerical control). From another viewpoint, a processing system 91 may be constructed by the processing machine 1 and the diagnostic device 93.

The diagnostic device 93, for example, may be configured including a computer (not shown). The computer, although not particularly shown, is configured including a CPU, ROM, RAM, and external storage device. By the CPU running the program stored in the ROM and/or external storage device, various types of function parts are constructed.

The diagnostic device 93 (function part) for example acquires information relating to processing from the controller 5 of the processing machine 1. As the information, for example, there can be mentioned information of errors detected by various two-dimensional scales (25X, 25Y, and 25Z). The information of errors may be raw information or may be information to which any processing is applied. Further, the diagnostic device 93 performs processing based on the acquired information.

As the processing based on the acquired information explained above, for example, there can be mentioned display of an image based on the acquired information. For example, the diagnostic device 93 has a display device 93a. The display device 93a for example is able to display any image and is configured by a liquid crystal display or organic EL display. Further, the diagnostic device 93 changes an image made to be displayed by the display device 93a in accordance with the acquired information.

As an example of the image displayed by the diagnostic device 93, for example, there can be mentioned one showing an error itself like a graph in which the position in the direction in which each movable portion (9X, 13, or 9Z) should move is plotted on an abscissa and the error is plotted on an ordinate. Further, the image may be a predetermined warning image which is displayed when the acquired error (straightness) is large.

As the processing which is executed by the diagnostic device 93, other than that explained above, for example, there can be mentioned one transmitting a control command to the controller 5 in accordance with the error (straightness). For example, the diagnostic device 93 may transmit a signal suspending the processing cycle to the controller 5 when the error is large.

The diagnostic device 93 may be adjacent to the controller 5 and connected with the latter by a cable or may be distant from the controller 5 (processing machine 1) and perform wireless communications and/or wired communications with the controller 5. In the latter case, the internet and/or a telephone network may be interposed between the controller 5 and the diagnostic device 93. Note that, where the diagnostic device 93 is adjacent to the controller 5, the diagnostic device 93 may be grasped as a portion of the processing machine 1 as well. Further, the diagnostic device 93 may be included in the controller 5.

(6. Summary of First Embodiment)

Below, the characteristic features of the processing machine 1 will be extracted, and the effect thereof will be explained. In the following explanation, for convenience, as the first movable portion with error detected by the two-dimensional scale, among the movable portions (9X, 13, and 9Z), the Z-axis table 9Z will be taken as an example. The same manner of description is also applied to the summary of the second embodiment described later. Needless to say, the same effects and the like can be applied when another movable portion (9X or 13) is taken as an example.

The processing machine 1 has a first movable portion (Z-axis table 9Z), linear guide (Z-axis guide 17Z), two-dimensional scale (Z-axis sensor 25Z), and spindle (workpiece spindle 15W). The Z-axis table 9Z supports the workpiece 103 or tool 101 (workpiece 103 in the example in FIG. 1). The Z-axis guide 17Z guides the Z-axis table 9Z in the first direction (Z-direction). The Z-axis sensor 25Z outputs a signal corresponding to a first displacement (ZPosZ) of the Z-axis table 9Z in the Z-direction and a first error (ZPosX) comprised of displacement of the Z-axis table 9Z in the second direction (X-direction) perpendicular to the Z-direction. The workpiece spindle 15W has a constant positional relationship with the Z-axis guide 17Z in a third direction (Y-direction) perpendicular to the Z-direction and to the X-direction (from another viewpoint, unmovable in the Y-direction relative to the Z-axis guide 17Z). Further, the workpiece spindle 15W makes the workpiece 103 or tool 101 (workpiece 103 in the example in FIG. 1) rotate about the first rotation axis (workpiece rotation axis AW) which is parallel to the Z-direction or X-direction. When assuming a virtual plane VP which includes the workpiece rotation axis AW and is parallel to the X-direction and Z-direction, the distance (0 in FIG. 6) from the virtual plane VP to the Z-axis sensor 25Z is less than 1/3 of the distance hr from the virtual plane VP to the Z-axis guide 17Z.

Due to this, as explained with reference to FIG. 6, it becomes easier to make the error dLr in the X-direction relating to the relative positions of the tool 101 and the workpiece 103 due to the rotation error $\alpha$r relating to the roll more easily

included in the error in the X-direction detected by the Z-axis sensor 25Z. As a result, the detection precision is substantially improved. Further, by controlling the processing machine 1 based on the detection result in which the precision is substantially improved, the processing precision is improved, and the quality of the product is improved.

The two-dimensional scale (Z-axis sensor 25Z) may be positioned in the virtual plane VP. In this case, for example, the above effect is easily improved.

The processing machine 1 may have the support portion (an extended portion of the X-axis bed 19X to the -Z side), fixed portion (Z-axis bed 19Z), and scale placement portion (Z-axis scale placement portion 21Z). The X-axis bed 19X may have a first surface (upper surface) facing the virtual plane VP. The Z-axis bed 19Z may be supported upon the upper surface of the X-axis bed 19X and may support the linear guide (Z-axis guide 17Z) and first movable portion (Z-axis table 9Z). The Z-axis scale placement portion 21Z may be supported on the upper surface of the X-axis bed 19X and may be separated from the Z-axis bed 19Z. The two-dimensional scale (Z-axis sensor 25Z) may have the scale portion 27 and the detection portion 29. The scale portion 27 of the Z-axis sensor 25Z may be fixed to the Z-axis scale placement portion 21Z. In the Z-axis sensor 25Z, the detection portion 29 may be fixed to the Z-axis table 9Z and may output a signal in accordance with a relative movement with respect to the scale portion 27. The Z-axis scale placement portion 21Z may have a height that exceeds the position of the Z-axis guide 17Z from the upper surface of the X-axis bed 19X to the side of the virtual plane VP.

In this case, for example, the Z-axis sensor 25Z can be made to approach the virtual plane VP. As a result, the effect explained above of improving the detection accuracy is exerted. Further, the scale portion 27 of the Z-axis sensor 25Z is not arranged on the Z-axis bed 19Z (such an embodiment may also be included in the art according to the present disclosure), but is arranged in the Z-axis scale placement portion 21Z spaced apart from the Z-axis bed 19Z. As a result, for example, when the Z-axis bed 19Z is deformed along with the movement of the Z-axis table 9Z, a probability of deformation of the scale portion 27 of the Z-axis sensor 25Z is lowered. The detection accuracy is improved also from this viewpoint.

The scale placement portion (Z-axis scale placement portion 21Z) may be a solid metal member. In this case, for example, it becomes harder to make the Z-axis scale placement portion 21Z deform due to a stress from an external portion, therefore the effect explained above is improved.

The processing machine 1 may further have a second movable portion (X-axis table 9X), second drive part (X-axis motor 23X), and controller 5. The X-axis table 9X may support the workpiece 103 or tool 101 (tool 101 in the example in FIG. 1). The X-axis motor 23X may drive the X-axis table 9X in the second direction (X-direction). The controller 5 may control the X-axis motor 23X. Further, the controller 5 may control the X-axis motor 23X so as to reduce the error of the relative speeds in the X-direction of the workpiece 103 and the tool 101 due to the speed error based on the speed error in the X-direction which is detected by the two-dimensional scale (Z-axis sensor 25Z).

In this case, the error of the "speed" of the Z-axis table 9Z in the X-direction is compensated for by movement of the X-axis table 9X in the X-direction. Due to this, the precision of the status control is improved. That is, an effect is exhibited different from improvement of precision in position control in a case where the error of the "displacement" of the Z-axis table 9Z in the X-direction is compensated for by movement of the X-axis table 9X in the X-direction. As a result, for example, the straightness is improved. From another viewpoint, for example, the probability of occurrence of overshoot and/or undershoot with respect to the target value of the relative position of the tool 101 relative to the workpiece 103 is lowered.

The processing machine 1 may further have a first drive part (Z-axis motor 23Z) which drives the first movable portion (Z-axis table 9Z) in the first direction (Z-direction) and a controller 5 which controls the Z-axis motor 23Z. The two-dimensional scale (Z-axis sensor 25Z) may simultaneously detect two first errors (errors of the Z-axis table 9Z in the X-direction) at mutually different positions in the Z-direction. The controller 5 may control the Z-axis motor 23Z so as to reduce, by parallel movement of the Z-axis table 9Z, the error (dwy in FIG. 7) of the relative positions in Z-direction of the workpiece 103 and the tool 101 due to the rotation error, based on the rotation error (ZRotY in FIG. 4, $\alpha$y in FIG. 7) about the axis parallel to the third direction (Y-direction) identified from the above two first errors.

In this case, for example, the rotation error can be easily and conveniently detected by the two-dimensional scale. Further, the above rotation error is converted to the error of the displacement in the direction in which the Z-axis table 9Z should move and can be compensated for by the control of the Z-axis motor 23Z. In other words, the rotation error itself is not reduced, but a linear error due to the rotation error is compensated for. Accordingly, for example, waviness in the advance direction of the Z-axis table 9Z can be reduced by a relatively simple configuration.

The processing machine 1 may further have a second movable portion (X-axis table 9X), second drive part (X-axis motor 23X), and controller 5. The X-axis table 9X may support the workpiece 103 or tool 101 (tool 101 in the example in FIG. 1). The X-axis motor 23X may drive the X-axis table 9X in the second direction (X-direction). The controller 5 may control the X-axis motor 23X. The two-dimensional scale (Z-axis sensor 25Z) may simultaneously detect two first errors (errors of the Z-axis table 9Z in the X-direction) at mutually different positions in the first direction (Z-direction). The controller 5 may control the X-axis motor 23X so as to reduce, by the parallel movement of the X-axis table 9X, the error (dLy in FIG. 7) of the relative positions in the second direction (X-direction) of the workpiece 103 and the tool 101 due to the rotation error, based on the rotation error (ZRotY in FIG. 4, $\alpha y$ in FIG. 7) about the axis parallel to the third direction (Y-direction) identified from the above two first errors.

In this case, for example, the rotation error can be easily and conveniently detected by the two-dimensional scale. Further, the above rotation error is converted to the error of the displacement in a lateral direction of the Z-axis table 9Z and can be compensated for by control of the X-axis motor 23X. In other words, the rotation error itself is not reduced, but linear error due to the rotation error is compensated for. Accordingly, for example, the straightness relating to the movement of the Z-axis table 9Z can be improved by a relatively simple configuration.

From another viewpoint, the processing machine 1 has the support portion (the extended portion of the X-axis bed 19X to the -Z side), fixed portion (Z-axis bed 19Z), first movable portion (Z-axis table 9Z), scale placement portion (Z-axis scale placement portion 21Z), and two-dimensional scale (Z-axis sensor 25Z). The extended portion of the X-axis bed 19X has the first surface (upper surface) which faces the third direction (Y-direction) perpendicular to the first direction (Z-direction) and to the second direction (X-direction). The Z-axis bed 19Z is supported on the upper surface of the extended portion of the X-axis bed 19X. The Z-axis table 9Z is supported on the Z-axis bed 19Z through the linear guide (Z-axis guide 17Z), is guided in the Z-direction with respect to the Z-axis bed 19Z by the Z-axis guide 17Z, and supports the workpiece 103 or tool 101 (workpiece 103 in the example in FIG. 1). The Z-axis scale placement portion 21Z is supported on the upper surface of the extended portion of the X-axis bed 19X and is spaced apart from the Z-axis bed 19Z. The Z-axis sensor 25Z outputs a signal corresponding to the first displacement of the Z-axis table 9Z in the Z-direction and to the first error comprised of the displacement of the Z-axis table 9Z in the X-direction. Further, the Z-axis sensor 25Z has the scale portion 27 and detection portion 29. The scale portion 27 is fixed to the Z-axis scale placement portion 21Z. The detection portion 29 is fixed to the Z-axis table 9Z and outputs a signal in accordance with a relative movement with respect to the scale portion 27. The Z-axis scale placement portion 21Z has a height that exceeds the positions of the Z-axis guides 17Z from the upper surface of the extended portion of the X-axis bed 19X to the side (+Y side) to which the upper surface faces. The scale portion 27 is positioned closer to the +Y side than the Z-axis guides 17Z.

In this case, for example, as already explained, the Z-axis sensor 25Z can be made to approach the virtual plane VP, and the probability of deformation of the scale portion 27 along with the movement of the Z-axis table 9Z is reduced. Note that, when the characteristic features of the embodiment are extracted from the viewpoint as explained above, for example, the Z-axis table 9Z need not have a constant positional relationship with the workpiece rotation axis AW in the Y-direction either.

The processing system 91 has the processing machine 1 as explained above and the diagnostic device 93. The diagnostic device 93 acquires information of the detected value of the first error (error of the Z-axis table 9Z in the X-direction) from the processing machine 1 and displays an image in accordance with the acquired information.

In this case, for example, by utilizing the information for control of the processing machine 1, the state of the guide surfaces of the Z-axis guides 17Z can be managed. In other words, it is not necessary to add a special measurement system for measuring the state of the guide surfaces of the Z-axis guides 17Z. Further, the state of the guide surfaces can be managed in real time during processing. As a result, for example, the probability of the processing ending up continuing in a state where the guide surfaces have deteriorated with age or breakage occurs (defective products are manufactured) is reduced inexpensively.

Further, the manufacturing method of the processed object has a processing step of using the processing machine 1 as explained above to make the workpiece 103 and the tool 101 contact and thereby process the workpiece 103 to the processed object.

In this case, for example, a processed object having a high precision of shape can be obtained due to the effect of reducing the influence of the straightness exerted upon the processing precision.

In the above processing step, when assuming a second virtual plane (virtual plane VP) including the processing point (see Pp) at which the tool 101 contacts the workpiece 103 and parallel to the first direction (Z-direction) and to the second direction (X-direction), the distance from the second virtual plane to the two-dimensional scale (Z-axis sensor 25Z) may be 1/3 or less of the distance from the second virtual plane to the linear guide (Z-axis guide 17Z).

That is, in the explanation of the embodiment, mainly, a plane including the rotation axis of the spindle (workpiece rotation axis AW concerning the Z-axis table 9Z) was envisioned as the virtual plane VP. However, in the processing step, a virtual plane VP including an actual processing point may be envisioned. Due to this, the influence of the error of the Z-axis sensor 25Z exerted upon the processing can be more correctly detected.

<Section B. Second Embodiment>

(7. Overall Configuration of Second Embodiment)

In the explanation of the second embodiment, basically, only the differences from the first embodiment will be explained. The matters which are not particularly explained may be considered the same as the first embodiment or may be deduced from the first embodiment.

FIG. 8 is a block diagram relating to a control system of a processing machine 201 according to the second embodiment. This view corresponds to FIG. 4. However, the illustration of signal paths from the sensors (225X, 225Y, and 225Z) to the controller 5 is more simplified than FIG. 4.

The second embodiment, in short, is an example where the error to be detected is increased more than that in the first embodiment. In more detail, as understood from the outputs (XPosX etc.) of each input processing part (31X, 31Y, or 31Z), for one movable portion (one axis), six detected values in total (five among them are errors) of parallel movements in three directions and rotation errors about three axes are acquired. Note that, the meanings of the six detected values output by the input processing part have been already explained in the explanation of the first embodiment.

In the processing machine 201, along with increase of the types of the detected values, the number of the correction parts increases more than those of the processing machine 1. Specifically, the correction parts 32Yx, 32Xy, and 32Zy are added. The correction part 32Yx converts the rotation error relating to the saddle 13 (Y-axis table) to error in the X-direction. The correction part 32Xy converts the rotation error relating to the X-axis table 9X to error in the Y-direction. The correction part 32Zy converts the rotation error relating to the Z-axis table 9Z to error in the Y-direction.

Further, in the processing machine 201, along with the increase of the types of the detected values, the rotation error which is processed by each correction part increases. Specifically, one correction part converted one rotation error to one linear error in the first embodiment, but converts three rotation errors to one linear error in the second embodiment. The calculation method thereof may be for example a method of mutually separately converting three rotation errors to three linear errors and adding three linear errors to each other. The method of converting one rotation error to one linear error was explained in the explanation of the first embodiment.

Further, in the processing machine 201, the displacement which is input to any control part (33X, 33Y, or 33Z) becomes one obtained by adding (broad sense including subtraction) errors in two directions. For this, see explanation of FIG. 5 etc.

(8. Scale)

The configuration of the sensor (225X, 225Y, or 225Z) which detects three displacements and three rotation errors is arbitrary. An example will be shown below.

FIG. 9 is a perspective view showing the configuration of the X-axis sensor 225X which detects the displacement and rotation error of the X-axis table 9X.

The X-axis sensor 225X, in addition to the X-axis sensor 25 (two-dimensional scale) in the first embodiment, has an X-axis auxiliary scale 26X which extends alongside the X-axis sensor 25. The X-axis auxiliary scale 26X, schematically, is given a configuration the same as the half of the X-axis sensor 25 on the side where two detection portions (29a) are provided. That is, the X-axis auxiliary scale 26X has a scale portion 27A having the same configuration as the A-phase scale portion 27a and two C-phase detection portions 29c having the same configuration as the two A-phase detection portions 29a (the entireties of the two are defined as the detection portion 29A).

Note that, as will be understood from the explanation which will be given later, the orientation of the patterns of the scale portion 27A may be made the same as the B-phase scale portion 27b as well. Further, the positions and the distance "d" (FIG. 3) etc. of the two C-phase detection portions 29c in the X-direction may be the same as the positions and the distance etc. of the two A-phase detection portions 29a (example shown) or may be different. In any case, the explanation relating to the A-phase of the X-axis sensor 25X may be utilized for the X-axis auxiliary scale 26X.

Further, the X-axis sensor 25X and the X-axis auxiliary scale 26X are arranged so that their width directions are made perpendicular to each other. For example, the X-axis sensor 25X is arranged in the same orientation as that in the first embodiment, and the X-axis auxiliary scale 26X is arranged having the Y-direction as the width direction. Note that, the two may be adjacent to each other or may be somewhat spaced apart. In FIG. 9, the scale portion 27A is positioned on the side of the B-phase scale portion 27b with respect to the scale portion 27. However, it may be positioned on the side of the A-phase scale portion 27a as well.

In the same way as the A-phase and B-phase, the displacement in the direction perpendicular to the patterns 27c in the scale portion 27A is detected by the C-phase detection portion 29c. This displacement is defined as dC, the inclination angle of the direction perpendicular to the pattern 27c with respect to the X-axis is defined as "$\theta$", the X-directional component of the displacement dC is defined as x1, and the Y-directional component of the displacement dC is defined as y1. At this time, in the same way as equation 1 (or equation (2)), the following equation stands.

$$dC = x1 \times \cos\theta + y1 \times \sin\theta \quad (7)$$

Here, x1 is found from equation (3), and "θ" is already known. Accordingly, y1 can be calculated by the following equation.

$$y1 = (dC - x1 \times \cos\theta) / \sin\theta \quad (8)$$

The rotation error about the Z-axis (error relating to pitch in the example shown) can be calculated in the same way as the rotation error about the Y-axis (rotation error relating to yaw in the example shown). That is, in the already explained equation (5), "z" may be replaced with "y", and A may be replaced with C.

The rotation error about the X-axis (error relating to roll in the example shown) for example can be calculated by applying the calculation method of the rotation error about the Y-axis. Specifically, in the YZ plane, a straight line connecting the A-phase detection portion 29a (or B-phase detection portion 29b) and the C-phase detection portion 29c and a fourth direction perpendicular to this straight line are assumed. The components in the fourth direction of z1 and y1 are defined as z1r and y1r. The distance on the straight line between the A-phase detection portion 29a and the C-phase detection portion 29c is defined as "d". When defined in this way, in the same way as equation (6), the rotation error about the X-axis can be calculated by arctan((z1r-y1r)/d).

There may be various sensors (scales) formed by further application of two-dimensional scales other than those explained above. Although not particularly shown, an example will be mentioned below.

For example, in each axis, two two-dimensional scales which extend in the same direction as each other and have width directions made perpendicular to each other may be provided as well. The configuration of each of the two-dimensional scales is arbitrary. The scales may be the same as each other or may be different from each other. Note that, a half of one of the two two-dimensional scales may be grasped as an auxiliary scale as well.

Further, for example, the auxiliary scale need not be made a half of a fishbone type two-dimensional scale, but may be made a half of a usual two-dimensional scale (configuration having only a plurality of patterns which are arranged in the Y-direction). This auxiliary scale may be combined with a fishbone type two-dimensional scale or may be combined with a usual two-dimensional scale. Note that, it is also possible to combine the X-axis auxiliary scale 26X in the example shown with a usual two-dimensional scale.

Further, for example, the sensor, in a configuration which is the same as or similar to a two-dimensional scale, may be made one identifying the distance between the scale portion 27 and the detection portion 29 based on the intensity of the signal generated in accordance with the patterns 27c. Due to this, a three-dimensional scale performing three-dimensional detection may be realized. Note that, in the present disclosure, unless there is a particular explanation or a contradiction arises, the two-dimensional scale includes a three-dimensional scale as one type thereof.

Returning to FIG. 8, the sensor (225X, 225Y, or 225Z) of each axis is given the configuration illustrated in FIG. 9. However, for convenience of illustration, the two-dimensional scale (25X, 25Y, or 25Z) and the auxiliary scale (26X, 26Y, or 26Z) are shown on the same plane.

(9. Summary of Second Embodiment)

The processing machine 201 according to the second embodiment has the same configuration as the processing machine 1 according to the first embodiment. Accordingly, for example, the measurement precision of waviness and the like can be improved.

The processing machine 201 may further have an auxiliary scale (Z-axis auxiliary scale 26Z). The Z-axis auxiliary scale 26Z may extend in the first direction (Z-direction) alongside the two-dimensional scale (Z-axis sensor 25Z), may have a configuration corresponding to the configuration of one side in the width direction of the Z-axis sensor 25Z, may not have a configuration corresponding to the configuration of the other side of the Z-axis sensor 25Z, and may have the third direction (Y-direction) as the width direction.

In this case, for example, by the two-dimensional scale and auxiliary scale, displacements in at least three directions can be detected. Further, it is also possible to detect (calculate) error relating to roll. Note that, in the second embodiment, it was also possible to detect yaw and pitch. However, only one detection portion (29a or 29c) need be provided in the A-phase and/or C-phase, and it may be impossible to detect yaw and/or pitch.

The processing machine 201 may further have an auxiliary scale (Z-axis auxiliary scale 26Z). The Z-axis auxiliary scale 26Z may extend in the first direction (Z-direction) alongside the two-dimensional scale (Z-axis sensor 25Z) and may output a signal corresponding to a second error comprising displacement in the third direction (Y-direction) of the first movable portion (Z-axis table 9Z). The processing machine 201 (controller 5 or Z-axis sensor 225Z) may identify the rotation error (error relating to the roll) about the axis parallel to the first direction (Z-direction) based on the first error detected by the Z-axis sensor 25Z (error of the Z-axis table 9Z in the X-direction) and the second error explained above which is detected by the Z-axis auxiliary scale 26Z.

In this case, for example, the error relating to roll can be detected by using a two-dimensional scale. Therefore, compared with an embodiment where another sensor (for example gyroscope sensor or two laser measuring devices) for detecting roll is provided (such an embodiment may be included in the art according to the present disclosure), the configuration for detection is simplified.

Note that, in the above first and second embodiments, the Z-direction is one example of the first direction, and the Z-axis table 9Z is one example of the first movable portion. However, the X-axis table 9X and the saddle 13 are also examples of the first movable portion and the X-direction and the Y-direction are also examples of the first direction.

When the Z-axis table 9Z is made one example of the first movable portion as explained above, the X-direction is one example of the second direction, and the Y-direction is one example of the third direction. The X-axis table 9X is one example of the second movable portion. The Z-axis motor 23Z is one example of the first drive part, and the X-axis motor 23X is one example of the second drive part. The Z-axis guide 17Z is one example of the linear guide. The Z-axis sensors 25Z and 225Z are each an example of the two-dimensional scale. The workpiece spindle 15W is one example of the spindle, and the workpiece rotation axis AW is one example of the first rotation axis. The extended portion of the X-axis bed 19X is one example of the support portion, the Z-axis bed 19Z is one example of the fixed portion, and the Z-axis scale placement portion 21Z is one example of the scale placement portion.

When the X-axis table 9X, saddle 13, or the Z-axis table 9Z is made one example of the first movable portion, the tool spindle 15T may be one example of the spindle. Further, when the X-axis table 9X is made one example of the first movable portion, the base 7 is one example of the support portion, and the X-axis bed 19X is one example of the fixed portion.

The techniques according to the present disclosure are not limited to the above embodiments and may be executed in various ways.

As explained also in the explanation of the embodiments, the processing machine is not limited to one having the configuration illustrated in FIG. 1. For example, the processing machine is not limited to an ultraprecise aspherical surface processing machine or another special machine tool and may be a general machine tool. Further, the processing machine is not limited to a machine tool. For example, it may be a robot as well. From another viewpoint, a program including information of commands concerning movement is not limited to an NC program and may be one generated by teaching.

Further, the processing machine is not limited to one performing grinding and/or polishing. For example, it may be one performing cutting or electrical discharge machining or may be one able to perform two or more of various processing explained above. The processing may be one where a tool which is not rotating is brought into contact with a rotating workpiece (for example turning), may be one where a rotating tool is brought into contact with a workpiece which is not rotating (for example milling), or may be one where neither of a workpiece nor tool is rotating.

The number of the movable portions provided in the processing machine (number of the axes which are driven) may be any number. For example, the processing machine need not have three axes relating to parallel movement. Conversely, it may have four or more axes as well.

Among the plurality of axes provided in the processing machine, the number of the axes in which a displacement is detected by a two-dimensional scale may be any number. Further, in one axis in which displacement is detected by a two-dimensional scale, the number of the errors among five types of errors (linear errors in two directions and rotation errors about three axes) being detected may be any number. For example, there may be one axis provided with a two-dimensional scale as well. The sum of the number of the axes provided with a two-dimensional scale and the number of the errors which are detected may be one between the first embodiment and the second embodiment. In a processing machine having four axes or more, a larger number of errors than those in the second embodiment may be detected as well.

The error which is detected by a two-dimensional scale need not be utilized for correction in real time either. For example, the error which is detected in a trial operation or a previous cycle may be utilized for correction of the NC program or may be utilized for correction for each cycle by the interpretation portion 39 or interpolation portion 41. Otherwise, it may be only utilized by a diagnostic device explained in the embodiment.

From the present disclosure, it is possible to extract various new technical ideas which do not have the essential requirement that a two-dimensional scale is made approach a virtual plane. Further, it is possible to extract various new technical ideas which do not have the essential requirement that a two-dimensional scale is arranged in a special scale placement portion. For example, from FIG. 5, a new technical idea of incorporating error of the speed of another axis (X-axis and/or Y-axis) into speed feedback of the target axis (Z-axis) can be extracted. This technical idea, unlike the embodiments, may be applied to a configuration in which two-dimensional scales are directly arranged on the beds and tables as well.

**Reference Signs List**

1... processing machine, 5... controller, 9X... X-axis table (second movable portion), 9Z... Z-axis table (first movable portion), 15W... workpiece spindle (spindle), 17Z... Z-axis guide 17Z (linear guide), 25Z... Z-axis sensor (two-dimensional scale), 101... tool, 103... workpiece, AW... workpiece rotation axis (first rotation axis), and VP... virtual plane.

**Claims**

1. A processing machine comprising:

   a first movable portion which supports a workpiece or tool;
   a linear guide which guides the first movable portion in a first direction;
   a two-dimensional scale which outputs a signal corresponding to a first displacement of the first movable portion in the first direction and to a first error which is a displacement of the first movable portion in a second direction perpendicular to the first direction; and
   a spindle which has a constant positional relationship with the linear guide in a third direction perpendicular to the first direction and to the second direction and makes the workpiece or the tool rotate about a first rotation axis which is parallel to the first direction or the second direction, wherein
   when assuming a virtual plane which includes the first rotation axis and is parallel to the first direction and to the second direction, a distance from the virtual plane to the two-dimensional scale is less than 1/3 of the distance from the virtual plane to the linear guide.

2. The processing machine according to claim 1, wherein the two-dimensional scale is positioned in the virtual plane.

3. The processing machine according to claim 1 or 2, further comprising:

   a support portion comprising a first surface facing the virtual plane;
   a fixed portion which is supported upon the first surface and supports the linear guide and the first movable portion; and
   a scale placement portion which is supported upon the first surface and is spaced apart from the fixed portion, wherein
   the two-dimensional scale comprises:

      a scale portion fixed to the scale placement portion; and
      a detection portion which is fixed to the first movable portion and outputs a signal in accordance with a relative movement with the scale portion, and

   the scale placement portion has a height from the first surface to a side of the virtual plane that exceeds a position of the linear guide.

4. The processing machine according to claim 3, wherein the scale placement portion is a solid metal member.

5. The processing machine according to any one of claims 1 to 4, further comprising:

   a second movable portion which supports the workpiece or the tool;
   a second drive part which drives the second movable portion in the second direction; and
   a controller which controls the second drive part, wherein
   the controller controls the second drive part, based on a speed error in the second direction which is detected by the two-dimensional scale, so as to reduce an error of relative speed in the second direction of the workpiece and the tool due to the speed error.

6. The processing machine according to any one of claims 1 to 5, further comprising:

   a first drive part which drives the first movable portion in the first direction; and
   a controller which controls the first drive part, wherein
   the two-dimensional scale simultaneously detects the two first errors at mutually different positions in the first direction, and
   the controller controls the first drive part, based on a rotation error about an axis parallel to the third direction identified from the two first errors, so as to reduce, by parallel movement of the first movable portion, an error of relative position in the first direction of the workpiece and the tool due to the rotation error.

7. The processing machine according to any one of claims 1 to 6, further comprising:

> a second movable portion which supports the workpiece or the tool;
> a second drive part which drives the second movable portion in the second direction; and
> a controller which controls the second drive part, wherein
> the two-dimensional scale simultaneously detects the two first errors at mutually different positions in the first direction, and
> the controller controls the second drive part, based on a rotation error about an axis parallel to the third direction identified from the two first errors, so as to reduce, by parallel movement of the second movable portion, an error of relative position in the second direction of the workpiece and the tool due to the rotation error.

8. The processing machine according to any one of claims 1 to 7, further comprising an auxiliary scale which extends in the first direction alongside the two-dimensional scale, comprises a configuration corresponding to a configuration of one side in a width direction of the two-dimensional scale, does not have a configuration corresponding to a configuration of another side in the width direction of the two-dimensional scale, and has the third direction as a width direction.

9. The processing machine according to any one of claims 1 to 8, further comprising an auxiliary scale which extends in the first direction alongside the two-dimensional scale, and outputs a signal corresponding to a second error which is a displacement of the first movable portion in the third direction, wherein
the processing machine identifies a rotation error about an axis parallel to the first direction based on the first error detected by the two-dimensional scale, and the second error detected by the auxiliary scale.

10. A processing machine comprising:

> a support portion comprising a first surface which faces a third direction perpendicular to a first direction and to a second direction;
> a fixed portion which is supported upon the first surface;
> a first movable portion which is supported by the fixed portion through a linear guide, is guided in the first direction with respect to the fixed portion by the linear guide, and supports a workpiece or tool;
> a scale placement portion which is supported upon the first surface and is spaced apart from the fixed portion; and
> a two-dimensional scale which outputs a signal corresponding to a first displacement of the first movable portion in the first direction and to a first error which is a displacement of the first movable portion in the second direction, wherein
> the two-dimensional scale comprises:
>
> > a scale portion fixed to the scale placement portion; and
> > a detection portion which is fixed to the first movable portion and outputs a signal in accordance with a relative movement with respect to the scale portion, and
>
> the scale placement portion has a height to a side which the first surface faces that exceeds a position of the linear guide and the scale portion is positioned closer to the side which the first surface faces than the linear guide.

11. A processing system comprising:

> the processing machine according to any one of claims 1 to 10; and
> a diagnostic device which acquires information of a detected value of the first error from the processing machine and displays an image in accordance with the acquired information.

12. A method of manufacturing a processed object comprising a processing step of using the processing machine according to any one of claims 1 to 10, bringing the workpiece and the tool into contact, and processing the workpiece to the processed object.

13. The method of manufacturing the processed object according to claim 12, wherein, in the processing step, when assuming a second virtual plane including a processing point at which the tool contacts the workpiece and parallel to the first direction and to the second direction, a distance from the second virtual plane to the two-dimensional scale is not more than 1/3 of a distance from the second virtual plane to the linear guide.

FIG.1

EP 4 786 095 A1

FIG.2

EP 4 786 095 A1

FIG.3A

FIG.3B

FIG.4

FIG.5

EP 4 786 095 A1

# FIG.6

## FIG.7

FIG.8

## FIG.9

## INTERNATIONAL SEARCH REPORT

| International application No. |
|---|
| **PCT/JP2024/033637** |

**A. CLASSIFICATION OF SUBJECT MATTER**

*B23Q 17/22*(2006.01)i; *B24B 49/10*(2006.01)i; *G05B 19/404*(2006.01)i; *G05B 19/416*(2006.01)i
FI: B23Q17/22 E; G05B19/416 E; G05B19/404 G; B24B49/10

According to International Patent Classification (IPC) or to both national classification and IPC

**B. FIELDS SEARCHED**

Minimum documentation searched (classification system followed by classification symbols)

B23Q17/22; B24B49/10; G05B19/404; G05B19/416

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2022-24542 A (SHIBAURA MACHINE CO., LTD.) 09 February 2022 (2022-02-09) | 1-13 |
| A | JP 2009-28819 A (FANUC CORPORATION) 12 February 2009 (2009-02-12) paragraph [0011] | 1-13 |
| A | JP 2008-87146 A (JTEKT CORP.) 17 April 2008 (2008-04-17) paragraphs [0011]-[0014], fig. 1-2 | 1-13 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **17 October 2024** | **29 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

INTERNATIONAL SEARCH REPORT

Information on patent family members

International application No.

**PCT/JP2024/033637**

| Patent document cited in search report | | | Publication date (day/month/year) | Patent family member(s) | | | Publication date (day/month/year) |
|---|---|---|---|---|---|---|---|
| JP | 2022-24542 | A | 09 February 2022 | US | 2023/0339060 | A1 | |
| | | | | WO | 2022/024916 | A1 | |
| | | | | KR | 10-2023-0029941 | A | |
| | | | | CN | 116194850 | A | |
| JP | 2009-28819 | A | 12 February 2009 | US | 2009/0030637 | A1 | |
| | | | | paragraph [0027] | | | |
| | | | | EP | 2019345 | A1 | |
| | | | | CN | 101352817 | A | |
| JP | 2008-87146 | A | 17 April 2008 | (Family: none) | | | |

Form PCT/ISA/210 (patent family annex) (July 2022)

**REFERENCES CITED IN THE DESCRIPTION**

**Patent documents cited in the description**

- JP 2022024542 A

- JP 2015109079 A